Europäisches Patentamt

European Patent Office

Office européen des brevets

(19)

(11) Numéro de publication : **0 360 688 B1**

(12) **FASCICULE DE BREVET EUROPEEN**

(45) Date de publication du fascicule du brevet :
**13.05.92 Bulletin 92/20**

(51) Int. Cl.⁵ : **B64C 27/32**

(21) Numéro de dépôt : **89402570.9**

(22) Date de dépôt : **19.09.89**

(54) **Dispositif de butées de battement pour pales de rotors de giravions, et tête de rotor le comportant.**

(30) Priorité : **23.09.88 FR 8812491**

(43) Date de publication de la demande :
**28.03.90 Bulletin 90/13**

(45) Mention de la délivrance du brevet :
**13.05.92 Bulletin 92/20**

(84) Etats contractants désignés :
**DE GB IT**

(56) Documents cités :
**FR-A- 948 570**
**FR-A- 2 584 996**
**GB-A- 2 139 171**

(73) Titulaire : **AEROSPATIALE Société Nationale Industrielle**
**37, Boulevard de Montmorency**
**F-75781 Paris Cédex 16 (FR)**

(72) Inventeur : **Mouille, René Louis**
**Villa La Pinède Chemin du Moulin de Testas**
**F-13100 Aix-en-Provence (FR)**
Inventeur : **Suzzi, Robert Jean**
**121 Rue Saint Pierre**
**F-13005 Marseille (FR)**

(74) Mandataire : **Bérogin, Francis et al**
**c/o CABINET HARLE & PHELIP 21 rue de la Rochefoucauld**
**F-75009 Paris (FR)**

EP 0 360 688 B1

## Description

La présente invention concerne les dispositifs de butées de battement pour les pales de rotors de giravions.

L'invention a plus précisément pour objet un dispositif de butées de battement, destiné à équiper une tête de rotor principal et articulé d'hélicoptère, et le dispositif de butées de battement selon l'invention trouve une application particulièrement intéressante à l'équipement de têtes de rotor comportant des mâts-moyeux intégrés, notamment des mâts-moyeux intégrés du type constitué d'un corps tubulaire monobloc, tel que décrit dans les demandes de brevet français n° 2 584 995, 2 584 996 et 2 584 997 de la demanderesse.

Afin de limiter le débattement angulaire ou fléchissement vers le bas des pales des rotors principaux articulés d'hélicoptères, sous l'effet du poids propre des pales, aux faibles vitesses de rotation et à l'arrêt des rotors, les têtes de rotors sont généralement équipées de butées de battement dites "butées basses", et de nombreuses réalisations différentes de dispositifs de butées basses ont déjà été proposées.

L'une de ces réalisations connues est particulièrement appréciée par les avantages qu'elle présente, à savoir une structure très simple, peu coûteuse à fabriquer, d'un fonctionnement qui donne toute satisfaction en service et d'une grande fiabilité. Dans cette réalisation, le dispositif de butées de battement comprend une butée basse et centrale, commune à toutes les pales, et comprenant au moins un anneau rigide, dit "réciproque", qui est monté déplaçable latéralement par rapport au mât-rotor, et contre lequel viennent prendre appui, lorsque le rotor tourne à faible vitesse ou est arrêté, des patins inférieurs rigides dont chacun est solidaire d'une partie inférieure du pied d'une pale ou d'un organe de liaison de ladite pale au moyeu du rotor.

Lorsque le rotor tourne au sol à une vitesse supérieure à un seuil donné, ou en vol, par exemple lorsqu'il tourne à sa vitesse nominale, le montage de chaque anneau réciproque déplaçable latéralement permet l'inclinaison du disque du rotor par la commande cyclique, du fait que la pale qui passe à la position la plus basse, au cours de sa rotation autour de l'axe du rotor, repousse chaque anneau réciproque du côté opposé, vers une pale qui passe alors à la position la plus haute, et laisse ainsi à chaque anneau réciproque la possibilité de se déplacer latéralement, sans s'opposer aux mouvements des pales.

Un tel dispositif de butées basses de battement à au moins un anneau réciproque permet également la commande en pas des pales, lorsque le rotor est arrêté, de façon à contrôler le libre débattement de la commande de pas. En effet, dans ce cas, lorsque l'on commande un changement du pas des pales, ces dernières sont en appui sur le ou les anneaux réciproques par leurs patins d'appui inférieurs et entraînent chaque anneau réciproque sur une petite rotation avec un très léger glissement des surfaces d'appui.

De tels dispositifs de butées basses de battement comportant des patins d'appui inférieurs rigidement solidaires en mouvements des pales, et venant s'appuyer contre une piste d'appui constituée par le pourtour d'au moins un anneau réciproque monté coulissant radialement autour du mât rotor et sous le moyeu, sont décrits par exemple dans le brevet US 2,742,098 et dans le brevet français 2 427 251 de la demanderesse.

Dans le brevet US 2,742,098, le dispositif pour limiter vers le bas les battements des pales d'un rotor principal de giravion comporte une butée inférieure et centrale à deux anneaux réciproques superposés coulissant librement dans un plan radial à l'intérieur d'un boîtier annulaire et plat, entourant concentriquement le mât-rotor, dont il est solidaire juste sous le moyeu. Les mouvements radiaux des anneaux réciproques sont limités par un anneau de butées, de plus petit diamètre, logé dans le boîtier et à l'intérieur des anneaux réciproques, et qui peut soit tourner avec le mât, en présentant une face radiale externe qui est concentrique au mât, soit être fixe et excentré par rapport à l'axe du mât, en étant supporté par un manchon fixe entourant le mât, afin de permettre un plus grand débattement angulaire des pales vers l'avant du rotor que vers l'arrière du rotor. Le boîtier logeant les anneaux réciproques présente des fentes radiales, dans lesquelles s'engagent des patins, dont chacun est rigidement solidaire des organes de liaison d'une pale au moyeu, et en saillie sous ces organes, pour venir en contact contre la face radiale externe des anneaux réciproques, de telle façon qu'à l'arrêt du rotor ou aux faibles vitesses de rotation de ce dernier, les débattements angulaires de battements des pales soient limités vers le bas par les anneaux réciproques, occupant alors une position moyenne, exactement concentrique à l'axe du rotor.

Dans le brevet FR 2 427 251, relatif à des rotors dont les moyeux sont d'une seule pièce avec les mâts-rotors correspondants, sous la forme de mâts-moyeux intégrés, auxquels le pied de chaque pale correspondante est accouplé par l'intermédiaire, d'une part, de moyens de retenue et d'articulation comprenant au moins une butée lamifiée, de préférence sphérique, à deux armatures dont l'une, en position radiale externe par rapport à l'autre, est fixée au moyeu, et, d'autre part, d'une pièce fourchue à deux branches radiales, qui est solidaire du pied de pale et dont les extrémités radiales internes des deux branches sont fixées à l'autre armature de la butée lamifiée, on a représenté sur les figures 3 et 5, et décrit en référence à ces figures, un dispositif de butées basses de battement comprenant un seul anneau réciproque métallique, coulissant radialement et librement dans une fente radiale d'une pièce annulaire unique, assujettie autour du mât-rotor et sous le moyeu, ou de plusieurs pièces supports régulièrement espacées sur le pourtour du mât. Cet anneau réciproque coopère avec des butées métalliques basses, dont chacune est en équerre et fixée par une aile contre la face inférieure de l'extrémité radiale interne de la branche inférieure de la pièce fourchue de liaison d'une pale correspondante au moyeu, la fixation étant assurée par des boulons de solidarisation des branches de cette pièce fourchue à l'armature interne de la butée sphérique lamifiée.

Cependant, ces dispositifs de butées basses de battement à anneau réciproque présentent un inconvénient, lorsqu'une rafale de vent, survenant durant les phases critiques de démarrage ou d'arrêt du rotor, lorsque la vitesse de rotation de ce dernier est inférieure à un seuil donné, et donc que la force centrifuge n'est pas encore suffisamment élevée pour stabiliser les pales dans leur plan de rotation, repousse l'une des pales fortement vers le bas, de sorte que cette pale s'appuie violemment sur l'anneau réciproque qui, n'étant pas soumis à des efforts de réaction suffisants de la part des autres pales, prend une position extrême, dans laquelle il n'empêche pas la pale violemment repoussée vers le bas d'atteindre une position dangereuse, de forte inclinaison, et de venir éventuellement frapper ou même sectionner, par son extrémité, la poutre de queue ou la cabine de l'hélicoptère. Il en est de même, à l'arrêt du rotor ou lorsque celui-ci ne tourne qu'à faible vitesse, lorsqu'une pale est sollicitée vers le haut par une forte rafale de vent. Dans ce cas, cette pale ainsi sollicitée peut prendre un angle de conicité élevé, puis retomber lourdement sur l'anneau réciproque en provoquant éventuellement une détérioration de cet anneau ou du patin d'appui solidaire de la pale, et en subissant elle-même un moment de flexion instantané très supérieur aux charges qu'elle peut normalement encaisser, ce qui peut conduire à sa mise hors-service.

Afin de remédier à cet inconvénient, sans toutefois renoncer a l'emploi d'une butée inférieure commune du type à anneau réciproque, dont les avantages ont été soulignés, il a déjà été proposé, notamment par les brevets français 948 570 et 2 434 079, de réaliser un dispositif de butées de battement combinant des butées basses à anneau réciproque et patin inférieur d'appui des pales, et des butées hautes, limitant les débattements angulaires des pales vers le haut.

Dans ce cas, en effet, lorsqu'une pale est violemment sollicitée angulairement vers le bas par une rafale de vent lorsque le rotor est à l'arrêt ou tourne à faible vitesse, la butée inférieure ou patin d'appui inférieur de cette pale repousse radialement l'anneau réciproque, qui tend lui-même à repousser le patin d'appui inférieur de l'une au moins des autres pales du rotor, dans le sens du relèvement de cet autre ou de ces autres pales. Mais ce relèvement est limité par les butées hautes de battement, qui, lorsque le rotor est à l'arrêt ou tourne à faible vitesse, sont toujours en position de travail. Ainsi, un tel dispositif de butées de battement combine des butées basses et des butées hautes qui coopèrent les unes avec les autres de façon à réduire les risques d'endommagement du rotor, lorsqu'il est soumis à des rafales de vent violentes alors qu'il est animé d'une vitesse de rotation inférieure à un seuil donné.

Dans le brevet FR 948 570, l'anneau réciproque est monté élastiquement déplaçable latéralement par une bague de caoutchouc ou plusieurs blocs ou manchons de caoutchouc répartis autour de lui, ou encore par des ressorts, qui relient une face supérieure de l'anneau réciproque, qui est inclinée sur l'axe du mât-rotor, à une face inférieure également inclinée d'une couronne solidaire du mât-rotor, autour de ce dernier et juste sous le moyeu. Pour limiter le déplacement angulaire des pales vers le bas, des doigts saillants sous les pales viennent en appui contre la surface périphérique externe de l'anneau réciproque, laquelle surface périphérique est de préférence disposée à une distance radiale aussi grande que possible par rapport à l'axe du rotor. Les butées hautes comprennent également des doigts saillants au-dessus des pales et dirigés radialement vers l'axe du rotor, pour venir en appui contre une butée fixe sur la partie supérieure du moyeu, afin de limiter les battements des pales vers le haut.

Les butées basses comprennent donc un anneau réciproque rigide, déplaçable élastiquement, et ainsi rappelé vers sa position concentrique à l'axe rotor, qui coopère avec des doigts d'appui inférieurs fixes des pales, et les butées hautes comprennent des butées supérieures et fixes sur le moyeu, qui coopèrent avec des doigts d'appui supérieurs et fixes des pales.

Dans le brevet FR 2 434 079 de la demanderesse, l'anneau réciproque, de section en forme de T couché, est monté coulissant radialement par sa partie intérieure mince engagée dans les fourchettes présentées à leur partie inférieure par trois étriers fixés par un élément coudé supérieur autour du mât-rotor et sous le moyeu. Une pièce en matière synthétique résistant à l'usure et aux chocs est vissée contre la face interne de l'extrémité inférieure de chaque étrier, pour être ainsi insérée entre ce dernier et la face radiale externe du mât-rotor, et une extrémité d'une lame ressort est pincée entre cette pièce et l'étrier qui la porte, cette lame ressort étant incurvée vers son autre extrémité afin de solliciter le bord interne de l'anneau réciproque, de façon à tendre à maintenir ce dernier dans une position moyenne concentrique à l'axe du mât-rotor. Le patin d'appui inférieur de chaque pale est une pièce rigide, à section en forme de T, fixée par une aile contre la face inférieure de la branche inférieure de la pièce fourchue de liaison de la pale au moyeu, par des boulons de fixation des extrémités radiales internes des deux branches de cette pièce fourchue à une armature interne d'une butée lamifiée de retenue et d'articulation de cette pale au moyeu, et la face sensiblement verticale du patin d'appui qui est en regard de l'anneau réciproque, et destinée à coopérer avec lui, est recouverte d'un revêtement en couche mince d'un matériau de résistance élevée aux chocs et à l'usure.

Les butées hautes comprennent, pour chaque pale, d'une part, un patin d'appui supérieur, fixé contre la face supérieure de la branche supérieure de la pièce fourchue de liaison de la pale au moyeu, par des boulons de fixation des extrémités radiales internes des deux branches de cette pièce fourchue sur l'armature interne de la butée lamifiée de retenue et d'articulation de cette pale au moyeu, et, d'autre part, une butée supérieure portée par le moyeu et escamotable ou éclipsable par l'action de la force centrifuge, à laquelle elle est soumise lorsque le rotor tourne avec une vitesse de rotation supérieure à un seuil donné, suffisant pour permettre le contrôle du rotor par les commandes de vol du giravion.

De nombreuses réalisations différentes de butées de battement individuelles pour chaque pale et escamotable automatiquement par l'effet de la force centrifuge, à l'encontre de ressorts de rappel qui tendent à les ramener dans une position de travail, dans laquelle elles limitent les débattements angulaires des pales d'un côté de leur plan de rotation, ont déjà été proposées pour constituer aussi bien des butées basses (voir par exemple les brevets US 2,614,640 et 2,719,593) que des butées hautes (voir par exemple le brevet FR 1 368 684). Chacune de telles butées comprend le plus souvent un levier pivotant, sollicité par un ressort de rappel, et dont un premier bras constitue une butée d'appui proprement dite, tandis qu'un second bras porte une masselotte sensible à l'action de la force centrifuge, pour faire pivoter le levier à l'encontre du ressort de rappel.

Dans le brevet FR 2 434 079, le levier est coudé et monté oscillant avec du jeu radial sur un pivot, d'axe parallèle à l'axe de rotation du rotor, et fixé, au voisinage du plan axial de symétrie de la pale correspondante au repos, sur une couronne rigide portée par la partie supérieure du moyeu, le ressort maintenant le levier, à l'arrêt et aux faibles vitesses de rotation du rotor, de sorte que son premier bras soit dans une position d'arrêt du patin d'appui supérieur de la pale correspondante, et que son second bras soit en appui, sur une partie de sa longueur, contre la couronne supportant le pivot. Les deux bras du levier coudé forment un angle tel que la force centrifuge appliquée à la masselotte, lorsque le rotor tourne, tend à surmonter la force de rappel du ressort et à faire pivoter le levier dans un sens tel que son premier bras est éloigné du patin d'appui supérieur en regard sur la pale correspondante. Une bague en matière synthétique à haute résistance est enfilée sur chaque pivot, entre ce dernier et le levier pivotant correspondant, avec lequel la bague présente un jeu radial suffisant pour que les chocs et efforts transmis par le patin d'appui supérieur au premier bras du levier pivotant soient directement transmis à la couronne par le second bras de ce levier, et non au pivot, de manière à soustraire ce dernier à ces chocs et efforts.

Dans un dispositif à butées basses de battement comprenant un anneau réciproque entourant le mât-rotor, compte tenu de la grande rigidité que doit présenter cet anneau réciproque, son poids n'est acceptable que si son diamètre est relativement faible, ce qui est généralement le cas dans les rotors de l'état de la technique présenté ci-dessus, équipés de mât-rotor tubulaire de diamètre assez faible.

Mais on a récemment proposé d'équiper des hélicoptères modernes de rotors principaux sur lesquels le mât et le moyeu sont réalisés sous la forme d'un ensemble mât-moyeu tubulaire intégré. Ceci a amené les concepteurs, pour des raisons d'optimisation en masse de cet ensemble mât-moyeu, à réduire l'épaisseur du mât et simultanément à augmenter son diamètre, de telle sorte que le montage d'un anneau réciproque de butée basse autour d'un tel mât-moyeu conduit à un poids prohibitif pour cet anneau réciproque.

Pour cette raison, la demanderesse a déjà proposé de monter des dispositifs de butées basses à anneau réciproque à l'intérieur de mâts-moyeux tubulaires intégrés, tels que ceux décrits dans ses brevets français 2 584 995 et 2 584 996. Ces dispositifs de butées basses sont en particulier représentés sur les figures 1, 2, 5 et 6 du brevet FR 2 584 995 et sur les figures 4 et 6 du brevet FR 2 584 996, et ont été décrits en référence à ces figures.

Ils comprennent un anneau réciproque en matériau composite entouré d'un cerceau en acier cémenté, qui est monté radialement et librement coulissant, à l'intérieur du mât-moyeu, dans un guide annulaire de section en forme de U couché et ouvert radialement vers l'extérieur, ce guide étant maintenu coaxialement dans le mât-moyeu par un support, également coaxial au mât-moyeu et essentiellement logé dans ce dernier.

Dans le cas où le mât-moyeu est surmonté d'une coiffe, le support de la butée de battement basse centrale et commune aux pales que constituent l'anneau réciproque et son guide annulaire peut être un support évasé vers le haut, portant la butée centrale de battement par sa partie inférieure resserrée, tandis qu'il est fixé à la coiffe par son extrémité évasée. En l'absence de coiffe, ce support peut également comprendre une portion tronconique interne au mât-moyeu et portant la butée basse et centrale de battement par sa petite base, tandis que sa grande base se prolonge par une portion évasée et rabattue à l'extérieur du mât-moyeu, par dessus le bord supérieur libre de ce dernier, auquel le support est fixé par des vis, Mais, avec ou sans coiffe sur le mât-rotor, il est également possible que le support de la butée centrale de battement comprenne une portée tubulaire sensiblement tronconique d'appui contre la face interne du mât, et un voile de centrage tubulaire, également sensiblement tronconique, qui est solidaire de la portée et qui supporte la butée centrale de battement.

Pour coopérer avec l'anneau réciproque interne au mât-moyeu, et pour chaque pale, un patin d'appui rigide est fixé contre la face inférieure de l'extrémité radiale interne de la branche inférieure d'une pièce fourchue de liaison de la pale au moyeu, par des boulons de fixation des extrémités radiales internes des deux branches de cette pièce fourchue à l'armature interne d'une butée lamifiée sphérique de retenue et d'articulation de la pale correspondante au moyeu, et, comme sur ce type de mât-moyeu tubulaire intégré, la branche inférieure de cette pièce fourchue traverse une ouverture ménagée dans la paroi du mât-moyeu, et qu'au moins la partie inférieure de la butée sphérique lamifiée et de son armature interne est également logée dans le mât-moyeu, le patin d'appui est lui-même logé dans ce dernier.

Ainsi, du fait de la disposition de l'anneau réciproque à l'intérieur du mât-moyeu, le diamètre et donc la masse de l'anneau réciproque sont inférieurs à ce qu'ils seraient si cet anneau réciproque était monté autour du mât-moyeu. Mais, du fait que les patins d'appui inférieurs solidaires en mouvement des pales sont également logés à l'intérieur du mât-moyeu, il en résulte des inconvénients majeurs pour la réalisation et l'utilisation de tels mâts-moyeux.

En effet, comme le montage de ces patins sous les extrémités internes des branches inférieures des pièces fourchues de liaison des pales au moyeu est effectué en même temps que les extrémités internes des deux branches de ces pièces fourchues sont fixées aux armatures internes des butées lamifiées, après introduction, d'une part, d'au moins les branches inférieures de ces pièces fourchues dans des ouvertures correspondantes et latérales du mât-moyeu, et, d'autre part, des butées lamifiées dans le mât-moyeu par l'ouverture libre à l'extrémité supérieure de ce dernier, il est nécessaire, pour des raisons d'accessibilité aux patins, de prévoir dans la paroi du mât-moyeu des ouvertures de passage desdites branches inférieures qui sont d'une taille très supérieure à celle qui est suffisante pour autoriser, en service, les débattements des pales autour de leurs axes de pas, de battement et de traînée. Mais la formation d'ouvertures d'une telle taille dans le mât-moyeu a pour conséquence de fragiliser considérablement ce dernier. De plus, pour procéder aux opérations de maintenance et d'entretien au niveau de l'anneau réciproque et des patins d'appui des pales, afin de remplacer par exemple les organes d'usure montés sur ces éléments ou ces éléments eux-mêmes, l'accessibilité par l'ouverture de l'extrémité supérieure du mât-moyeu est insuffisante du fait que ces éléments sont disposés en-dessous des butées lamifiées et des portions des branches de liaison fixées à celles-ci et du fait de l'encombrement de ces organes à l'intérieur de la partie supérieure du mât-moyeu, qui constitue le corps de moyeu tubulaire.

De plus, pour la réalisation pratique d'une telle butée basse par anneau réciproque interne au mât, il est difficile, et dans certains cas impossible, de loger le patin d'appui rigide solidaire de la pièce fourchue de liaison de la pale au moyeu, de telle sorte qu'il ne vienne pas buter sur la paroi interne du mât lors du débattement angulaire maximal vers le haut de la pale et donc de la pièce fourchue de liaison pale-moyeu, surtout dans le cas où le diamètre interne du mât tronconique diminue rapidement en direction du pied de mât.

Ces débattements des pales sont en effet de l'ordre de 27°, avec respectivement +20° vers le haut et -7° vers le bas.

Par ailleurs les organes de butée basse des pales doivent encaisser la reprise du moment d'appui des pales, qui est égal au produit du poids de la pale (de 30 à 100 kg pour les hélicoptères de moyen tonnage) par la distance du centre de gravité de la pale à son centre de pivotement sur le moyeu (distance faisant 5 à 9 mètres pour les hélicoptères moyens).

Ce moment d'appui, déjà élevé naturellement, doit être multiplié par un coefficient majorateur de 2 à 3 pour tenir compte du cas de chargement le plus défavorable qui est celui du roulage au sol sur terrain bosselé d'un hélicoptère tracté, rotor arrêté.

Cet important moment d'appui, rotor arrêté, est repris par le dispositif du butée basse qui, pour ne pas être sollicité par des efforts prohibitifs, impose de ménager entre le centre de pivotement de la pale et le point d'appui de la butée basse, un bras de levier de la plus grande longueur possible.

Cependant si on augmente ce bras de levier, on augmente l'espace nécessaire aux débattements du mécanisme aux angles extrêmes et par conséquent l'encombrement de l'élément de butée basse lié au manchon.

Etant donné, d'une part, la nécessité de surdimensionner l'épaisseur du mât dans la zone où sont ménagés les trous de passage pour l'élément inférieur de la pièce fourchue de liaison pale-moyeu et, d'autre part, les impératifs de libre débattement du patin d'appui lié à cette pièce fourchue, il est très difficile de loger à l'intérieur du mât tous les constituants du mécanisme de butée basse par anneau réciproque.

Pour limiter les débattements des pales d'un côté et/ou de l'autre du plan de rotation des pales d'un rotor à mât-moyeu tubulaire intégré, on connaît également, par le brevet FR 2 584 997 de la demanderesse, un dispositif de butées de battement qui comprend une butée centrale, fixée coaxialement dans le mât-moyeu et portant au moins une surface de butée bordant axialement une portée concave, et limitant les déplacements des armatures radiales internes des butées lamifiées par contact avec des ergots en saillie radiale vers l'intérieur sur ces armatures, d'un côté et/ou de l'autre d'une portée convexe usinée dans le fond d'évidements ménagés dans les faces radiales internes de ces armatures, et glissant contre la portée concave de la butée centrale.

Mais un tel dispositif de butées de battement, s'il convient au mât-moyeu intégré d'un rotor arrière d'hélicoptère dont le plan de rotation est sensiblement vertical, n'est pas approprié à l'équipement d'un mât-moyeu de ce type, pour un rotor principal dont le plan de rotation est sensiblement horizontal. En effet, le moment d'encastrement des pales d'un rotor principal sur le moyeu, moment résultant du poids de la pale multiplié par la distance de son centre de gravité à l'articulation de battement, étant très élevé, ne peut être encaissé par ce type de butées de battement, essentiellement en raison du faible bras de levier constant entre les ergots d'appui et le centre de rotation des butées lamifiées.

L'invention a pour but de proposer un dispositif de butées de battement, destiné en particulier aux têtes de rotor principal qui sont munies d'un ensemble mât-moyeu au moins partiellement tubulaire, et qui conserve les avantages procurés par des butées basses à anneau réciproque logé à l'intérieur de l'ensemble mât-moyeu, sans en présenter les inconvénients mentionnés ci-dessus.

Un autre but de l'invention est de proposer un dispositif de butées de battement comportant des butées hautes dont les effets se combinent avantageusement à des butées basses selon l'invention.

L'invention a encore pour but de proposer une tête de rotor principal de giravion, avantageusement équipée d'un dispositif de butées de battement vers le bas et, de préférence, également vers le haut, conforme à l'invention.

A cet effet, l'invention a pour objet un dispositif de butées de battement pour les pales d'un rotor principal de giravion, du type comprenant un ensemble mât-moyeu présentant au moins une partie tubulaire en-dessous de moyens de retenue et d'articulation des pales au moyeu, le dispositif selon l'invention comprenant des butées basses de battement comportant au moins un organe rigide d'appui réciproque des pales, monté à l'intérieur du mât-moyeu et coulissant radialement sur un support fixé coaxialement dans ladite partie tubulaire de l'ensemble mât-moyeu, et, pour chaque pale, un patin d'appui inférieur, solidaire en mouvement du pied de pale, de façon à limiter les débattements de la pale vers le bas par coopération avec l'organe rigide d'appui réciproque des pales, et ce dispositif se caractérise en ce que ledit organe est un plateau solidaire de branches, en nombre égal à celui des pales, et régulièrement réparties en direction circonférentielle autour du plateau en s'étendant chacune vers l'extérieur dans une direction générale sensiblement radiale par rapport audit plateau, et en étant engagée chacune dans une ouverture ménagée dans l'ensemble mât-moyeu, et chaque patin d'appui inférieur est essentiellement externe au mât-moyeu et vient en butée contre l'extrémité radiale externe d'une branche, pour limiter les battements vers le bas de la pale correspondante.

Il en résulte qu'un tel dispositif de butées de battement reste peu encombrant et fiable, car son plateau d'appui réciproque des pales, et, éventuellement, la majeure partie des branches sont logés à l'intérieur de l'ensemble mât-moyeu, de sorte que l'on conserve les avantages d'un anneau réciproque de petit diamètre et de poids limité. De plus, la réalisation industrielle d'un tel dispositif reste simple et économique. Le surplus de masse éventuellement dû à la présence des branches est largement compensé par les gains d'accessibilité au niveau des liaisons des patins d'appui inférieur aux pales ou organes de liaison des pales au moyeu, et au niveau des appuis de ces patins contre les extrémités des branches liées au plateau d'appui. De la sorte les éléments d'usure sur les patins et sur les branches peuvent être échangés sans aucun autre démontage.

De plus, lorsque l'ensemble mât-moyeu est un ensemble tubulaire qui est évasé de sa partie inférieure, formant le mât-rotor, vers sa partie supérieure, formant le moyeu, au moins jusqu'au niveau des moyens de retenue et d'articulation des pales au moyeu, et lorsque le mât-moyeu tubulaire intégré ainsi réalisé ne se resserre pas sensiblement au-dessus de ce niveau, il est possible de démonter le plateau d'appui et les branches qu'il porte par l'ouverture de l'extrémité supérieure du mât-moyeu, sans qu'il soit nécessaire de dissocier ce mât-moyeu de la boîte de transmission principale, sur laquelle il est encastré et par laquelle il est entraîné en rotation autour de son axe, qui est l'axe de rotation du rotor.

En conséquence, la réalisation de l'organe rigide d'appui réciproque des pales sous la forme d'un plateau d'appui central se prolongeant vers chaque pale par une extension radiale ou branche passant par une ouverture du mât-moyeu, permet l'installation et le dimensionnement de ce plateau d'appui à extensions radiales ainsi que des patins d'appui avec lesquels il coopère, de façon aisée. En effet, pour chaque pale, le patin d'appui inférieur et son bras support se trouvent à l'extérieur du mât-rotor et peuvent être fixés directement sur un organe de liaison de la pale au moyeu.

Afin d'assurer une bonne rigidité en direction transversale des branches liées au plateau d'appui, il est avantageux que ces branches présentent chacune une forme en plan sensiblement rectangulaire,

et une épaisseur sensiblement constante.

Pour faciliter la réalisation industrielle de l'ensemble comprenant le plateau rigide d'appui et les branches, cet ensemble est avantageusement réalisé sous la forme d'une étoile, avec autant de branches que de pales du rotor, et présentant de préférence un évidement central circulaire, allégeant l'étoile dans sa partie centrale qui n'est pratiquement pas sollicitée.

Afin de réaliser un tel plateau en étoile d'un poids minimal, mais cependant d'une rigidité transversale suffisamment grande, il est avantageux que ce plateau en étoile soit un plateau en matériaux composites stratifiés, comprenant un empilement de couches ou plis de tissus ou nappes de fibres synthétiques ou minérales de résistance mécanique élevée et agglomérés par une résine synthétique polymérisée.

Dans ce cas, afin de protéger l'extrémité radiale externe de chaque branche stratifiée, d'une part, contre les chocs des patins d'appui, qui pourraient entraîner un effort au matage trop important pour ces extrémités stratifiées et, d'autre part, contre l'usure qui pourrait résulter de petits mouvements relatifs des patins d'appui sur ces extrémités, chaque branche est équipée, à son extrémité radiale externe, d'un sabot de contact en saillie par l'ouverture correspondante de l'ensemble mât-moyeu et à l'extérieur de ce dernier.

Pour faciliter encore les opérations de maintenance et d'entretien, il est alors avantageux que chaque sabot de contact soit un sabot métallique monté amovible sur la branche correspondante. Ainsi, chaque sabot de contact est une pièce d'usure rapportée, par exemple par boulonnage, sur la branche correspondante et pouvant être échangée sans autre démontage.

Le même avantage peut être sensiblement obtenu au niveau des patins d'appui inférieur des pales, si chacun d'eux est, par exemple, solidarisé au pied de la pale correspondante ou à l'organe de liaison du pied de pale correspondant au moyeu par une pièce rigide de liaison directement fixée sous ledit pied de pale ou ledit organe de liaison.

En effet, les efforts d'appui des patins des pales contre les sabots d'extrémité des branches sont très importants, et le test de libre débattement des commandes de vol sur toute leur course, rotor à l'arrêt, impose des roulements et des glissements, au niveau des points d'appui, qui sont susceptibles de créer une usure et, par conséquent, de nécessiter un remplacement relativement fréquent des pièces de contact. La disposition de ces pièces entièrement à l'extérieur du mât-moyeu facilite considérablement cette opération d'échange, en cas de besoin.

Pour guider favorablement le plateau en étoile dans ses déplacements transversaux tout en le rappelant constamment en position moyenne dans son plan et également en rotation, afin qu'il ne provoque ainsi aucun balourd en vol, il est avantageux que le plateau en étoile coulisse radialement par sa face inférieure sur une plaque inférieure de support et soit suspendu par sa face supérieure à un organe supérieur de support, par l'intermédiaire d'au moins un organe élastique de rappel, ladite plaque inférieure et ledit organe supérieur de support étant fixés radialement dans l'ensemble mât-moyeu.

Dans une forme avantageusement simple de réalisation, l'organe élastique est une couronne coaxiale ou un ensemble de plots répartis coaxialement en direction circonférentielle, ladite couronne ou lesdits plots étant réalisés en un matériau élastiquement déformable, tel qu'un élastomère. De plus, la plaque inférieure de support et l'organe supérieur de support définissent avantageusement un logement de révolution autour de l'axe du rotor.

Pour permettre le lancement et l'arrêt du rotor par grand vent, en toute sécurité, le dispositif de butées de battement selon l'invention est avantageusement du type comprenant en outre des butées hautes, qui comportent, pour chaque pale du rotor, un organe d'appui supérieur, solidaire en mouvement du pied de la pale correspondante, et une butée supérieure indépendante, automatiquement escamotable par la force centrifuge, et comprenant un levier monté oscillant sur un pivot solidaire du moyeu, et dont un premier bras est conformé en doigt de butées, tandis qu'un second bras, d'une part, porte une masselotte, et, d'autre part, présente une partie d'appui, destinée à venir contre une surface d'appui solidaire du moyeu, ainsi qu'un ressort de rappel sollicitant le levier de façon à le rappeler ou à le maintenir, lorsque la vitesse de rotation du rotor est inférieure à un seuil donné, dans une position d'arrêt, dans laquelle la partie d'appui du second bras du levier repose contre la surface d'appui solidaire du moyeu, et le doigt de butée du levier est dirigée vers l'organe d'appui supérieur correspondant, de façon à limiter les débattements vers le haut de la pale correspondante, par la venue de l'organe d'appui contre le doigt de butées, et tel que, lorsque la vitesse de rotation du rotor est supérieure au seuil donné, la force centrifuge appliquée à la masselotte fait pivoter le levier à l'encontre du ressort et dans un sens tel que le doigt de butée est écarté de l'organe d'appui supérieur correspondant, de façon à ne pas s'opposer au débattement vers le haut de la pale correspondante. Dans ce cas, dans lequel les butées basses à plateau réciproque sont complétées par des butées hautes à butées indépendantes escamotables par la force centrifuge, le dispositif de butées de battement selon l'invention se caractérise en outre en ce que l'axe du pivot de chaque levier pivotant d'une butée escamotable est sensiblement perpendiculaire au plan radial passant par l'axe du rotor et par l'axe longitudinal de la pale correspondante, et ce levier pivotant est monté, entre ses extrémités, sur le pivot de sorte que son doigt de butée, en position inférieure par rapport au pivot, soit pivoté radialement vers l'intérieur à partir de la position d'arrêt, lorsque la masselotte et le second bras, en position supérieure par rapport au pivot, sont pivotés radialement vers l'extérieur par la force centrifuge.

Ainsi, à faible vitesse de rotation du rotor ou lorsque celui-ci est arrêté, si un mouvement de débattement angulaire d'une pale vers le haut est amorcé sous l'effet du vent, l'organe d'appui supérieur correspondant vient en contact avec le doigt de butée du levier en position d'arrêt, ce qui empêche la poursuite de ce mouvement. Par contre, lorsque la vitesse de rotation du rotor est supérieure au seuil donné, suffisant pour permettre un contrôle efficace du rotor par les commandes de vol, la masselotte et le second bras du levier sont pivotés vers l'extérieur et le doigt de butée du levier est pivoté vers l'intérieur, de sorte que rien ne s'oppose au débattement vers le haut de l'organe d'appui supérieur avec la pale, dans la plage de débattement parcourue par la pale en service.

Avantageusement, le levier pivotant est sensiblement droit et sensiblement vertical en position d'arrêt, et la partie d'appui du second bras est un bec en saillie sensiblement radiale vers l'intérieur et qui s'arc-boute contre la surface d'appui solidaire du moyeu, avantageusement délimitée par un épaulement en saillie et sensiblement radial vers l'extérieur sur le moyeu, de sorte qu'en position d'arrêt le levier se comporte comme une entretoise venant en contact, par son doigt de butée à sa partie inférieure, contre l'organe d'appui supérieur de la pale correspondante, et par son bec, vers son extrémité supérieure, contre l'épaulement solidaire du moyeu. Dans ces conditions, tout pivotement de la pale correspondante vers le haut est impossible. Pour une masse donnée de la masselotte, le mode d'action de celle-ci est optimal lorsqu'elle se trouve à l'extrémité libre du second bras du levier oscillant, le bec de ce levier étant alors en saillie sur le second bras, entre le pivot et la masselotte.

Pour faciliter le montage de chaque butée escamotable sur le moyeu, la surface d'appui solidaire de ce dernier et la chape dans laquelle le pivot correspondant est monté en rotation sont montées ensemble par boulonnage sur un organe de fixation sur le moyeu des moyens de retenue et d'articulation de la pale correspondante sur le moyeu. Ceci permet également d'éviter au montage tout réglage du positionnement relatif de ladite surface d'appui et du pivot.

Lorsque chaque pale est reliée au moyeu par une pièce fourchue de liaison, l'organe d'appui supérieur correspondant est avantageusement monté à l'intérieur de cette pièce fourchue, afin de pouvoir être positionné à proximité du levier pivotant sur le moyeu de la butée escamotable correspondante.

L'invention a également pour objet une tête de rotor, destinée à un rotor principal de giravion, et du type comprenant un ensemble mât-moyeu présentant au moins une partie tubulaire en communication avec l'extérieur de l'ensemble mât-moyeu par des ouvertures en nombre égal à celui des pales du rotor, ménagées dans l'ensemble mât-moyeu et régulièrement réparties en direction circonférentielle sur ce dernier, autour de l'axe de rotation du rotor, en-dessous de moyens de retenue et d'articulation sur le moyeu de pièces de liaison des pales au moyeu, ainsi qu'un dispositif de butées de battement à butées basses comportant une butée centrale réciproque montée radialement coulissante sur un support fixé coaxialement dans la partie tubulaire de l'ensemble mât-moyeu, et, pour chaque pale, un patin d'appui inférieur fixé sur la pièce de liaison correspondante, de façon à limiter les débattements de la pale vers le bas par coopération avec la butée centrale réciproque, et le dispositif de butées de battement est un dispositif selon l'invention et tel que présenté ci-dessus, dont chacune des branches du plateau rigide formant la butée centrale réciproque est engagée dans l'une des ouvertures de l'ensemble mât-moyeu, de sorte que son extrémité radiale externe soit en regard d'un patin d'appui inférieur correspondant, à l'extérieur de l'ensemble mât-moyeu.

Il est clair que la tête de rotor selon l'invention peut être avantageusement équipée d'un ensemble mât-moyeu tel que décrit dans les brevets français précités de la demanderesse, relatifs à des mâts-moyeux tubulaires intégrés, auxquels chaque pale est reliée par une pièce de liaison fourchue à deux branches d'attache, dont au moins la branche inférieure traverse une ouverture ménagée dans le mât-moyeu tubulaire intégré pour être fixée, à l'intérieur de ce dernier et par son extrémité radiale interne, auxdits moyens de retenue et d'articulation de cette pièce fourchue sur le moyeu. Dans ce cas, pour chaque pale, le patin d'appui inférieur correspondant du dispositif de butées de battement selon l'invention est fixé en saillie sous la pièce fourchue correspondante, dont la branche d'attache inférieure traverse la même ouverture du mât-moyeu que celle dans laquelle est engagée la branche de la butée centrale réciproque qui coopère avec le patin d'appui inférieur correspondant. Ainsi, les mâts-moyeux tubulaires intégrés sont des ensembles sur lesquels il est particulièrement avantageux d'installer un dispositif de butées de battement selon l'invention, puisqu'un tel mât-moyeu présente déjà des ouvertures permettant le passage des branches de la butée centrale réciproque, que cette dernière soit un plateau réciproque prolongé d'extensions radiales ou un plateau en forme d'étoile à branches sensiblement radiales.

Lorsque le dispositif de butées de battement équipant la tête de rotor selon l'invention comprend également des butées hautes, dont chaque butée escamotable comprend un levier pivotant dont le second bras porte un bec, comme présenté ci-dessus, la tête de rotor est alors avantageusement telle que les moyens de retenue et d'articulation de chaque pièce de liaison sur le moyeu comprennent une armature maintenue sur une partie du moyeu par une ferrure de fixation retenue contre la périphérie de cette partie de moyeu. Par exemple, ces moyens de retenue et d'articulation peuvent être de préférence une butée sphérique lamifiée, dont l'armature radiale externe est conformée en étrier chevauchant de l'intérieur vers l'extérieur une jante de renforcement du moyeu, et retenue sur cette jante par la ferrure de fixation, appliquée contre la face radiale externe de la jante et de l'étrier. En effet, la ferrure de fixation peut alors supporter, en saillie sensiblement radiale vers l'extérieur, d'une part une chape dans laquelle le pivot du levier de la butée supérieure escamotable correspondante est monté en rotation, et, d'autre part, un épaulement contre lequel le bec de ce levier pivotant prend appui, en position d'arrêt. On simplifie ainsi considérablement le montage et le positionnement relatif des différents éléments constituant les butées hautes.

Simultanément, il est en outre avantageux que la tête de rotor selon l'invention soit telle que la pièce de liaison de chaque pale au moyeu soit un manchon, dont la partie radiale interne soit conformée en chape à deux branches d'attache sur une autre armature des moyens de retenue et d'articulation sur le moyeu, par exemple sur l'armature radiale interne d'une butée sphérique lamifiée constituant ces moyens, cette autre armature étant en position radiale interne par rapport à l'armature maintenue sur le moyeu par la ferrure de fixation précitée. En effet, dans ce cas, l'organe d'appui supérieur correspondant et coopérant avec le doigt de butée du levier pivotant correspondant, pour limiter les débattements de la pale correspondante vers le haut, peut être facilement réalisé sous la forme d'une portion de surface tronconique, ménagée à l'intérieur du manchon et/ou entre les deux branches d'attache de la chape radiale interne de ce dernier, qui entoure le levier pivotant. Les butées hautes sont ainsi protégées à intérieur des manchons de liaison des pales au moyeu.

Enfin, pour éviter la présence d'un grand nombre de moyens de fixation sur l'ensemble mât-moyeu des têtes de rotor selon l'invention, le support coaxial de la butée centrale réciproque du dispositif de butées de battement qui les équipe est fixé à l'ensemble du moyeu par des moyens fixant simultanément sur ce dernier une attache, sur laquelle est articulé un compas tournant d'entraînement en rotation du plateau tournant d'un dispositif de commande de pas à plateaux cycliques, monté autour de l'ensemble mât-moyeu.

L'invention sera mieux comprise, et d'autres caractéristiques et avantages de l'invention apparaîtront par la description d'un exemple de réalisation, décrit ci-dessous à titre non limitatif, en référence aux dessins annexés sur lesquels :

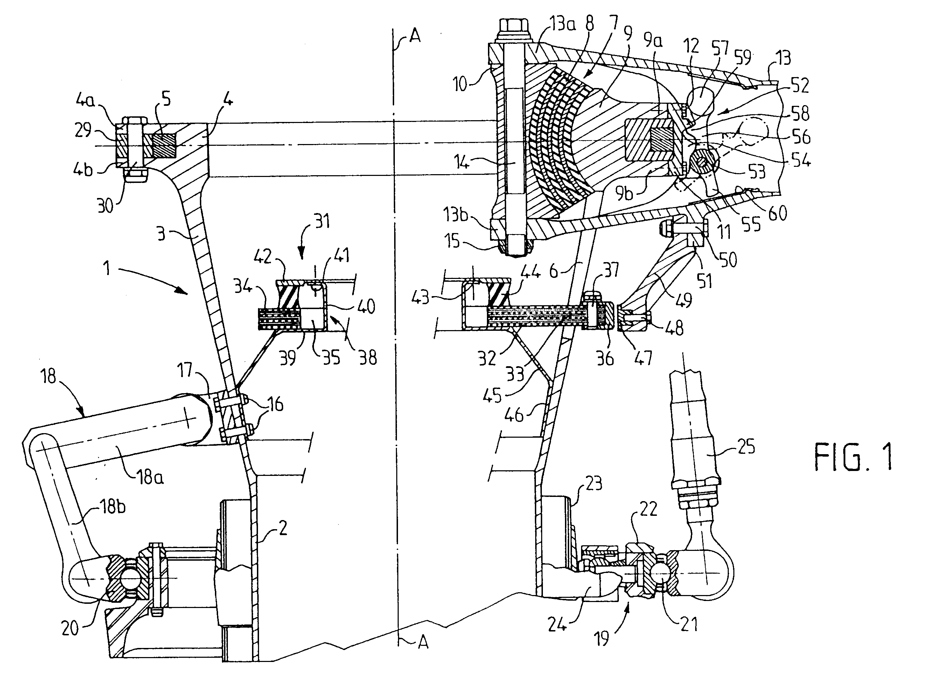

– la figure 1 est une vue partielle, pour partie en coupe par deux demi-plans radiaux, et pour partie en élévation latérale, de la tête d'un rotor principal quadripale d'hélicoptère, et

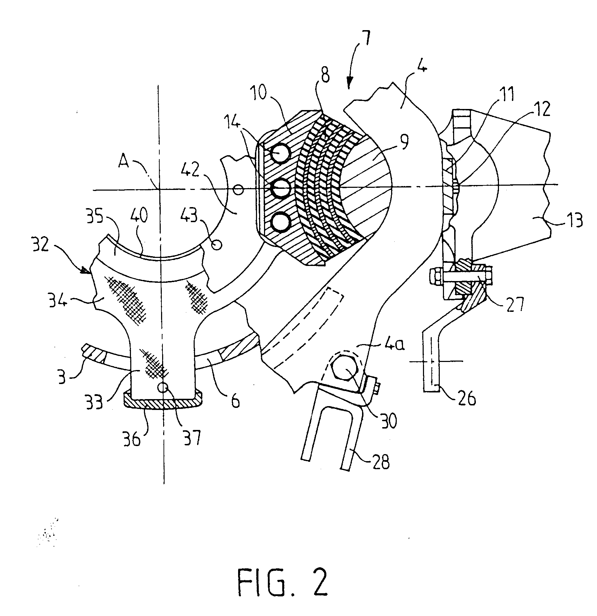

– la figure 2 est une vue partielle, en partie en coupe selon le plan de rotation des pales, en partie en coupe horizontale au travers de la butée commune réciproque, et en partie en plan, de la tête de rotor de la figure 1.

La tête de rotor principal quadripale d'hélicoptère représentée sur les figures 1 et 2 est du type de celles décrites dans le brevet FR 2 584 996 de la demanderesse, qui est incorporé par voie de référence dans le présent mémoire, et auquel on se reportera avantageusement pour davantage de précisions.

Cette tête de rotor comprend un mât moyeu tubulaire intégré 1, essentiellement constitué d'un corps tubulaire monobloc d'axe A correspondant à l'axe de rotation du rotor, et dont la partie inférieure forme un mât rotor tubulaire 2, de forme générale extérieure cylindrique de section circulaire, par le pied duquel le mât-moyeu 1 est encastré sur la boîte de transmission principale de l'hélicoptère et entraîné en rotation autour de son axe A par cette dernière. La partie supérieure du mât-moyeu 1 forme un corps de moyeu tubulaire 3, qui prolonge directement le mât 2 et présente une forme générale externe sensiblement tronconique ou en tronc de pyramide à base sensiblement carrée à sommets arrondis, et s'évase depuis le mât 2 jusqu'à son extrémité supérieure libre, surépaissie localement et périphériquement en jante de renforcement 4, de section transversale sensiblement rectangulaire et en saillie essentiellement radialement vers l'extérieur du corps de moyeu 3. Cette jante 4 présente une gorge périphérique, s'ouvrant radialement vers l'extérieur, et dans laquelle est logée une ceinture de renfort 5, en matériaux composites, et par exemple réalisée par bobinage dans cette gorge de stratifils unidirectionnels de fibres synthétiques ou minérales de haute résistance mécanique (fibres de carbone ou aramides) imprégnés d'une résine synthétique polymérisable, telle qu'une résine époxyde, qui est ensuite polymérisée et durcie. Le corps tubulaire monobloc 1 formant le mât 2, le moyeu 3 et la jante 4, peut être métallique, par exemple en acier ou en titane, et réalisé à partir d'une ébauche matricée ou forgée. Mais il est également possible de le réaliser en matériaux composites, par bobinage de stratifils ou drapage de couches ou plis de tissus de fibres à haute résistance mécanique, et agglomérés par une résine synthétique polymérisée.

Des ouvertures radiales 6, identiques et en nombre égal à celui des pales du rotor, donc 4 ouvertures 6 dans cet exemple, sont pratiquées dans la portion du moyeu 3 qui est directement adjacente à la jante 4, et sont régulièrement réparties en direction circonférentielle sur le pourtour de cette portion du moyeu 3, chacune des ouvertures 6 étant ménagée dans une partie du moyeu 3 formant sous la jante 4 un sommet arrondi de sa section sensiblement carrée.

Chacune des 4 pales (non représentées) est reliée au moyeu 3 par des organes de retenue et d'articulation constitués par une butée lamifiée sphérique 7, dont la partie centrale en portion de sphère est formée d'un empilement 8 alterné et adhérisé de coupelles rigides et de couches d'élastomère élastiquement déformables, en forme de calottes sphériques, cet empilement 8 étant vulcanisé, d'une part, par la face radiale externe concave de sa couche externe d'élastomère contre la face radiale interne convexe d'une armature externe 9, et, d'autre part, par la face radiale interne convexe de sa couche interne d'élastomère contre la face radiale externe concave d'une armature interne 10, les deux armatures 9 et 10 et les coupelles rigides de l'empilement 8 étant par exemple métalliques. Chaque butée lamifiée sphérique 7 est appliquée contre la face radiale interne de la jante 4, au-dessus d'une ouverture 6, et est fixée contre la jante 4 par son armature externe 9, conformée dans sa partie externe, en étrier ouvert radialement vers l'extérieur, afin de chevaucher par ses bras supérieur 9a et inférieur 9b les faces respectivement supérieure et inférieure de la jante 4, et une ferrure de fixation 11 est appliquée contre la face radiale externe de la jante 4, de la ceinture 5 et des bras 9a et 9b de l'étrier, et est fixée à ces bras par des vis radiales 12. La butée sphérique lamifiée 7 constitue ainsi une rotule d'articulation, qui est retenue sensiblement à l'intérieur de l'ouverture délimitée à l'extrémité supérieure du moyeu 3 par la jante 4, et qui autorise des débattements angulaires limités autour de son centre de rotulage ou de rotation, situé dans la ceinture 5 et correspondant au centre de courbure des calottes sphériques et des surfaces convexe et concave des éléments de cette butée sphérique lamifiée 7.

Chaque pale est rattachée à la butée sphérique lamifiée 7 correspondante par un manchon radial de liaison 13, dont la partie radiale interne est conformée en chape à deux branches d'attache espacées verticalement l'une au-dessus de l'autre, et ce manchon 13 est ainsi disposé que la branche supérieure 13a de sa chape interne s'étend vers l'axe A en passant au-dessus de la butée lamifiée 7 et de la jante 4, tandis que sa branche inférieure 13b s'étend à l'intérieur du moyeu 3 en passant par l'ouverture 6 correspondante, et les extrémités radiales internes des branches 13a et 13b sont fixées contre les faces axiales opposées de l'armature interne 10 de la butée lamifiée 7 par des boulons 14, d'axe parallèle à l'axe A et retenus par leur tête sur la branche supérieure 13a, et dont les tiges traversent des trous alignés percés dans les branches 13a et 13b et dans l'armature interne 10, des écrous 15 freinés ou goupillés étant vissés sur des extrémités inférieures filetées de ces tiges de boulons, en saillie sous la branche inférieure 13b, et serrés contre cette dernière. L'armature interne 10 est ainsi montée en entretoise entre les deux branches 13a et 13b de la chape interne du manchon 13, dont la partie radiale externe (non visible sur les figures) peut également être conformée en chape, entre les deux branches de laquelle le pied de la pale correspondante est retenu par deux broches d'axe parallèle à l'axe A, et dont l'une peut être amovible afin de permettre le "repliage" de la pale correspondante, dans le plan de rotation du rotor, par rotation de cette pale autour de l'autre broche.

Par une telle liaison du manchon 13 à la butée sphérique lamifiée 7, les couches d'élastomère de cette dernière travaillent, d'une part, en compression à la transmission, à la jante 4 du moyeu 2 et à sa ceinture 5, des forces centrifuges sollicitant la pale, et, d'autre part, en cisaillement pour permettre les mouvements angulaires de la pale autour de son axe longitudinal de changement de pas, autour de son axe de trainée (parallèle à l'axe A) et autour de son axe de battement (perpendiculaire à l'axe de changement de pas et dans le plan de rotation des pales), ces trois axes étant concourant au centre de rotation de la butée lamifiée 7 et perpendiculaires deux à deux.

Des liaisons boulonnées 16 fixent sur la face externe du mât-moyeu 1 une attache 17 sur laquelle est articulée la branche supérieure 18a d'un compas tournant 18, dont la branche inférieure 18b est articulée sur le plateau tournant 20 d'un dispositif à plateaux cycliques, désigné dans son ensemble par la référence 19. Ce compas 18 entraîne en rotation, avec le mât-moyeu 1, le plateau tournant 20 monté en rotation par le roulement 21 autour du plateau non-tournant 22, lui-même coulissant axialement autour d'un guide tubulaire 23 entourant le mât-moyeu 1, et oscillant dans toutes les directions autour de l'axe A par un mécanisme à rotule 24, sous l'action des commandes pilotes (non représentées), et de sorte que les mouvements de translation et d'oscillation du plateau non-tournant 22 sont transmis par le plateau tournant 20 au manchon 13 de liaison de chaque pale au moyeu 3 par une biellette de commande de pas 25, articulée par un embout à rotule inférieur sur le plateau tournant 20 et par un embout à rotule supérieur sur l'extrémité d'un levier de commande de pas 26, fixé en saillie latérale sur le manchon 13 par une liaison boulonnée 27 (voir figure 2).

Chaque pale est également reliée au moyeu 3 par un organe de rappel élastique en trainée à amortissement incorporé (non représenté) appelé également amortisseur de trainée ou adaptateur de fréquence, et cet organe est disposé latéralement entre, d'une part, le pied de la pale ou la partie d'extrémité radiale externe de son manchon de liaison 13, auquel il est accouplé par une rotule, et, d'autre part, une portion de la jante 4, qui est située entre le manchon 13 de cette pale et le manchon 13 d'une pale immédiatement voisine, par exemple suivante si on considère le sens de rotation du rotor, et cet organe est accouplé à la jante 4 par une rotule (non représentée) retenue dans une attache telle que 28 solidarisée au moyeu 3 par une patte 29 retenue par une liaison boulonnée 30 entre les branches supérieure 4a et inférieure 4b d'une chape formée par une extension radiale vers l'extérieur et localisée des bords de la jante 4, de part et d'autre de la gorge logeant la ceinture 5.

Pour limiter les battements des pales vers le bas et vers le haut, lorsque la vitesse de rotation du rotor est inférieure à un seuil donné, égale par exemple au tiers de la vitesse de rotation nominale (et ainsi suffisant pour qu'un bon contrôle du rotor soit assuré par les commandes de vol comportant le dispositif à plateaux cycliques 19), et en particulier pour permettre en toute sécurité le lancement et l'arrêt du rotor par grand vent, la tête de rotor est équipée d'un dispositif de butées de battement à butées basses et à butées hautes, et tel que décrit ci-dessous.

Les butées basses comprennent une butée centrale 31, commune a toutes les pales, et du type dit "réciproque" qui est essentiellement montée coaxiale à l'intérieur du mât-moyeu 1, et qui comporte un plateau en forme d'étoile 32, ayant autant de branches radiales 33 que le rotor comporte de pales, et dont la partie centrale 34 est évidée par une ouverture circulaire 35. Le plateau en étoile 32 est stratifié en matériaux composites, et constitué d'un empilage de couches ou plis de tissus de fibres de verre ou de carbone, pré-imprégnés d'une résine époxyde thermodurcissable, l'empilage étant formé dans un moule dans lequel il est comprimé et la résine polymérisée est durcie à chaud. Cette réalisation en matériaux composites stratifiés permet d'obtenir une grande rigidité transversale du plateau pour un poids minimal. Chacune des quatre branches 33 du plateau 32 présente une forme en plan sensiblement rectangulaire (voir figure 2) et a une épaisseur sensiblement constante (voir figure 1), et un sabot métallique de contact 36, constituant un élément d'usure, est monté amovible par une liaison boulonnée 37 de façon à chevaucher l'extrémité radiale externe de chaque branche 33. Le plateau en étoile 32 est déplaçable radialement dans une pièce de révolution 38, fixé coaxialement autour de l'axe A et à l'intérieur du mât-moyeu 1, et aménagée en logement en U, ouvert radialement vers l'extérieur, et dans lequel le plateau 32 est retenu de sorte que chaque branche radiale 33 est engagée dans une ouverture 6 du moyeu 3 et présente son sabot 36 en saillie à l'extérieur du mât-moyeu 1. La pièce de révolution 38 définissant le logement en U comprend une plaque annulaire de support inférieur 39, sur laquelle le plateau en étoile 32 peut coulisser radialement par la face inférieure de sa partie centrale annulaire 34, et le bord radial interne de la plaque 39 est prolongé par une cheminée tubulaire coaxiale 40, traversant avec du jeu radial l'ouverture centrale 35 du plateau en étoile 32, la cheminée 40 se terminant à son extrémité supérieure par une collerette radiale externe 41, sur laquelle une plaque annulaire de support supérieur 42 et coaxiale est fixée par des liaisons boulonnées 43. Une couronne 44 en un matériau élastiquement déformable, par exemple en élastomère, est adhérisée par sa face supérieure sous la partie radiale externe de la plaque supérieure 42, et par sa face inférieure sur la face supérieure de la partie centrale annulaire 34 du plateau 32, autour de l'ouverture centrale 35 de ce dernier. La cheminée 40 constitue une butée centrale limitant les déplacements radiaux du plateau en étoile 32, qui est rappelé élastiquement par la couronne d'élastomère 44 vers une position moyenne de centrage, coaxiale, pour l'appui simultané des pales fléchies vers le bas à l'arrêt du rotor. La couronne 44 constituant un ressort de rappel peut être remplacée par des plots en élastomère, régulièrement répartis en direction circonférentielle.

La plaque de support inférieur 39 est solidaire, par son bord radial externe, d'un voile de centrage tronconique et coaxial 45, évasé vers le bas, et se prolongeant par une portée 46 tronconique et coaxiale d'appui contre la face interne du mât-moyeu 1, sur laquelle cette portée 46 est fixée par des liaisons boulonnées, qui comprennent celles 16 assurant simultanément la fixation de l'attache 17 du compas tournant 18 au mât-moyeu 1.

Les butées basses comprennent également, pour chaque pale, un patin d'appui inférieur 47, constituant une pièce d'usure, et montée amovible par une liaison boulonnée 48 sur l'extrémité inférieure d'un talon rigide de liaison et d'appui 49, incliné dans un plan radial de bas en haut et de l'intérieur vers l'extérieur, et dont l'extrémité supérieure est fixée de manière amovible par une liaison boulonnée 50 sur une patte 51 d'une seule pièce avec le manchon de liaison 13 correspondant, et en saillie sous ce manchon 13.

Lorsque la vitesse de rotation du rotor est inférieure au seuil donné, le talon 49 et son patin d'appui 47 permettent de limiter le déplacement angulaire du manchon 13 et de la pale correspondante vers le bas, par appui du patin 47 contre le sabot 36 équipant l'extrémité radiale externe de la branche 33 correspondante du plateau en étoile 32.

Lorsque toutes les pales reposent simultanément par leur patin d'appui 47 contre les sabots d'extrémité 36 des branches 33 du plateau en étoile 32, ce plateau 32 transmet les efforts d'appui en les équilibrant de l'une à l'autre des pales, de telle sorte que ce plateau 32 reste sensiblement centré sur l'axe A du mât-moyeu 1.

Lorsque le rotor tourne à sa vitesse normale de fonctionnement, et que le pilote actionne la commande de pas cyclique, la pale qui passe en position basse repousse le plateau 32 du côté opposé, ce mouvement étant autorisé au plateau 32 par le fait que la pale diamétralement opposée est en position haute.

Après l'atterrissage et au moment de l'arrêt du rotor, le retour du plateau 32 en position moyenne de centrage pour l'appui simultané de toutes les pales est facilité par le rappel assuré par la couronne élastique 44.

Les butées hautes comprennent, pour chaque pale, une butée indépendante et escamotable sous l'effet de la force centrifuge, qui comporte un levier sensiblement droit 52, monté pivotant par une partie intermédiaire entre ses extrémités, sur un pivot 53 d'axe horizontal et perpendiculaire au plan radial passant par le centre de la butée sphérique lamifiée 7 correspondante, et simultanément par le milieu d'une chape à deux oreilles verticales, parallèle et radiale 54, en saillie vers l'extérieur sur la moitié inférieure de la ferrure de fixation 11 correspondante, et entre lesquelles le pivot 53 est monté. Un ressort spirale (non représenté pour des raisons de clarté), enroulé autour du pivot 53, et dont une extrémité est ancrée dans une oreille de chape 54, tandis que l'autre extrémité est ancrée dans le levier 52, sollicite ce levier 52 de façon à le rappeler vers la position sensiblement verticale qu'il occupe en traits pleins sur la figure 1, et dans laquelle il s'étend sensiblement parallèlement à la ferrure 11, et radialement à l'extérieur de cette dernière. Le levier 52, qui se trouve ainsi logé à l'intérieur du manchon de liaison 13 correspondant, présente, de part et d'autre du pivot 53 s'étendant en-dessous de l'axe longitudinal de ce manchon 13, un petit bras inférieur 55, aménagé en doigt de butée dirigé, dans cette position, vers la face interne de la partie inférieure du manchon 13, et un grand bras supérieur 56, portant une masselotte 57 à son extrémité libre, ainsi qu'un bec 58 en saillie sensiblement radiale vers l'intérieur, entre le pivot 53 et la masselotte 57, de sorte que la face supérieure du bec 58 constitue une surface d'appui contre une surface d'appui en regard délimitée sur la face inférieure d'un épaulement 59 en saillie sensiblement radiale vers l'extérieur sur la moitié supérieure de la ferrure 11.

Les butées hautes comprennent également, pour chaque pale, un organe d'appui supérieur constitué par un tronçon tubulaire essentiellement tronconique 60, à surface interne renforcée, qui est emmanché dans la partie du manchon 13 située à la base des branches 13a et 13b, et qui est elle-même légèrement tronconique et divergente vers l'axe A, en entourant le levier pivotant 52.

Lorsque la vitesse de rotation du rotor est inférieure au seuil, et que le patin d'appui inférieur 47 correspondant est en appui contre le plateau en étoile 32, en position moyenne, il existe un faible jeu entre le doigt de butée 55 du levier 52, occupant la position en traits pleins sur la figure 1, sous l'effet du ressort de rappel, et la surface d'appui en regard sur l'organe 60, tandis que le bec 58 est pratiquement appliqué contre l'épaulement 59.

Ainsi, le levier 52 s'oppose à tout déplacement angulaire significatif du manchon 13 et de la pale correspondante vers le haut, par rapport au moyeu 3. En effet, si un tel mouvement est amorcé par la pale sous l'effet du vent, la surface d'appui interne et inférieure du tronçon tubulaire 60 du manchon 13 vient contre le doigt de butée 55 du levier 52, lequel est monté avec un jeu suffisant sur le pivot 53 pour que son bec 56 vienne s'arc-bouter contre l'épaulement 59 de la ferrure 11, sans charger le pivot 53. Dans ces conditions, le levier 52 se comporte comme une entretoise rigide chargée en compression entre le manchon 13 et l'épaulement 59, et qui s'oppose au pivotement du manchon et de la pale vers le haut.

Par contre, lorsqu'on lance le rotor et que celui-ci atteint une vitesse de rotation supérieure au seuil précité, la masselotte 57, soumise à la force centrifuge, fait pivoter le levier 52 autour de l'axe 53, à l'encontre de l'action du ressort de rappel, de sorte que le bras supérieur 56 et la masselotte 58 sont pivotés radialement vers l'extérieur, ce qui écarte le bec 58 de l'épaulement 59, et que, simultanément, le doigt de butée 55 est pivoté radialement vers l'intérieur ce qui l'écarte de la surface d'appui tronconique en regard sur l'organe 60, de telle sorte que le pivotement angulaire du manchon 13 et de la pale correspondante vers le haut devient possible, en raison de la position alors occupée par le levier pivotant 52, et telle que représentée en traits mixtes sur la figure 1.

Au ralentissement du rotor et avant son arrêt, le pivotement en sens inverse du levier 52, de la position inclinée en traits mixtes sur la figure 1 vers la position verticale en traits pleins, sous l'action du res sort de rappel, vient à nouveau empêcher tout mouvement angulaire significatif du manchon et de la pale vers le haut, comme indiqué précédemment.

On notera que tout pivotement violent d'une pale vers le bas, lorsque la vitesse de rotation du rotor est inférieure au seuil, tend à entraîner un déplacement radial important du plateau en étoile 32, par l'appui violent du patin 47 de cette pale fléchie vers le bas contre le sabot 36 de l'extrémité de la branche 33 correspondante du plateau 32. Cependant, la branche opposée 33 de ce plateau repoussé par son sabot 36 et vers le haut, le patin 47 fixé sous le manchon 13 de la pale opposée. Mais comme le débattement angulaire vers le haut de cette pale opposée est empêché par le levier pivotant 52 correspondant, une réaction est opposée à un tel déplacement du plateau en étoile 32, de sorte que ce dernier s'oppose également au fléchissement violent de la première pale considérée.

Les effets combinés des butées hautes indépendantes et escamotables par la force centrifuge et des butées basses à plateau réciproque ont pour conséquence de limiter ainsi les débattements angulaires des pales vers le haut comme vers le bas, grâce à un dispositif peu encombrant et fiable, du fait que le plateau en étoile réciproque est monté dans le mât-moyeu, et que les butées hautes escamotables sont chacune logées à l'intérieur du manchon de pale correspondant. La réalisation industrielle du dispositif est relativement simple et économique, et les opérations d'entretien et de maintenance sont facilitées, du fait que les éléments d'usure 36 et 47 des butées basses sont rapportés par boulonnage sur des pièces accessibles à l'extérieur du mât-moyeu, et peuvent donc être échangés sans aucun autre démontage. Le plateau en étoile lui-même peut être démonté par l'ouverture de l'extrémité supérieure du mât-moyeu, sans nécessiter de dissocier ce dernier de la boîte de transmission principale sur laquelle il est encastré. Enfin, le rappel du plateau en étoile en position moyenne par la couronne élastique 44, qui assure un rappel non seulement dans son plan mais également en rotation, a pour conséquence que ce plateau ne provoque aucun balourd en vol.

En référence aux figures 1 et 2, le dispositif selon l'invention a été décrit comme équipant une tête de rotor à mât-moyeu tubulaire intégré selon l'une des variantes du brevet FR 2 584 996. Mais il est clair que le dispositif selon l'invention peut tout aussi bien équiper des têtes de rotor ayant des mâts-moyeux selon les autres variantes décrites dans ce brevet FR 2 584 996 ou encore selon les différentes variantes décrites dans le brevet FR 2 584 995. Ces différentes variantes se rapportent à des mâts-moyeux tubulaires intégrés présentant, pour chaque pale, une seconde ouverture traversée par la branche supérieure de la pièce fourchue de liaison de la pale au moyeu. Cette seconde ouverture peut être ménagée dans une extension du mât-moyeu au-delà de la jante ou de la ceinture de renforcement, ou encore définie par des échancrures ménagées dans une coiffe prolongeant le mât-moyeu et/ou dans une partie du mât-moyeu s'étendant au-delà de la ceinture ou de la jante de renforcement.

**Revendications**

1. Dispositif de butées de battement pour les pales d'un rotor principal de giravion, du type comprenant un ensemble mât-moyeu (1) présentant au moins une partie tubulaire en-dessous de moyens (7) de retenue et d'articulation des pales au moyeu (3), ledit dispositif comprenant des butées basses de battement comportant au moins un organe rigide d'appui réciproque des pales (34) monté à l'intérieur du mât-moyeu (1) et coulissant radialement sur un support (38) fixé coaxialement dans ladite partie tubulaire de l'ensemble mât-moyeu (1), et, pour chaque pale un patin d'appui inférieur (47), solidaire en mouvement du pied de pale, de façon à limiter les débattements de la pale vers le bas par coopération avec l'organe d'appui réciproque des pales (34), caractérisé en ce que l'organe d'appui réciproque des pales (34) est un plateau (32) solidaire de branches (33) en nombre égal à celui des pales, et régulièrement réparties en direction circonférentielle autour du plateau (32) en s'étendant chacune vers l'extérieur selon une direction générale sensiblement radiale par rapport au plateau (32), et en étant engagée chacune dans une ouverture (6) ménagée dans l'ensemble mât-moyeu (1), et chaque patin d'appui inférieur (47) est essentiellement externe au mât-moyeu (1), et vient en butée contre l'extrémité radiale externe d'une branche (33) correspondante pour limiter les battements vers le bas de la pale correspondante.

2. Dispositif selon la revendication 1, caractérisé en ce que chaque branche (33) présente une forme en plan sensiblement rectangulaire et une épaisseur sensiblement constante.

3. Dispositif selon l'une des revendications 1 et 2, caractérisé en ce que le plateau d'appui réciproque (32) et les branches (33) sont réalisés sous la forme d'une étoile présentant un évidement central circulaire (35).

4. Dispositif selon la revendication 3, caractérisé en ce que le plateau en étoile (32) est un plateau en matériaux composites stratifiés comprenant un empilement de couches ou plis de tissus ou nappes de fibres synthétiques ou minérales à résistance mécanique élevée et agglomérés par une résine synthétique polymérisée.

5. Dispositif selon l'une des revendications 1 à 4, caractérisé en ce que l'extrémité radiale externe de chaque branche (33) est équipée d'un sabot de contact (36) en saillie par l'ouverture correspondante (6) à l'extérieur de l'ensemble mât-moyeu (1).

6. Dispositif selon la revendication 5, caractérisé en ce que chaque sabot de contact (36) est un sabot métallique monté amovible (37) sur la branche (33) correspondante.

7. Dispositif selon l'une des revendications 3 à 6, caractérisé en ce que le plateau en étoile (32) coulisse radialement par sa face inférieure sur une plaque inférieure de support (39) et est suspendu par sa face supérieure à un organe supérieur de support (42) par l'intermédiaire d'au moins un organe élastique de rappel (44), ladite plaque inférieure (39) et ledit organe supérieur (42) de support étant fixés radialement dans l'ensemble mât-moyeu (1)

8. Dispositif selon la revendication 7, caractérisé en ce que l'organe élastique (44) est une couronne coaxiale ou un ensemble de plots répartis coaxialement en direction circonférentielle, et en un matériau élastiquement déformable, tel qu'un élastomère.

9. Dispositif selon l'une des revendications 7 et 8, caractérisé en ce que la plaque inférieure de support (39) et l'organe supérieur (42) de support appartiennent à un guide (38) définissant un logement de révolution autour de l'axe (A) de l'ensemble mât-moyeu (1).

10. Dispositif selon l'une des revendications 1 à 9, caractérisé en ce que chaque patin d'appui inférieur (47) est solidarisé au pied de pale correspondant ou à l'organe de liaison (13) du pied de pale correspondant au moyeu (3) par une pièce rigide de liaison (49) directement fixée (50, 51) sous ledit pied de pale ou ledit organe de liaison (13).

11. Dispositif de butées de battement selon l'une des revendications 1 à 10, du type comprenant en outre des butées hautes comportant, pour chaque pale du rotor, un organe d'appui supérieur (60), solidaire en mouvement du pied de pale correspondant, et une butée supérieure indépendante, automatiquement escamotable par la force centrifuge, comprenant un levier (52) monté oscillant sur un pivot (53) solidaire du moyeu (3), et dont un premier bras (55) est conformé en doigt de butée, tandis qu'un second bras (56) d'une part, porte une masselotte (57) et, d'autre part, présente une partie d'appui (58) destinée à venir contre une surface d'appui (59) solidaire du moyeu (3), ainsi qu'un ressort de rappel, sollicitant le levier (52) de façon à le rappeler ou à le maintenir, lorsque la vitesse de rotation du rotor est inférieure à un seuil donné, dans une position d'arrêt, dans laquelle ladite partie d'appui (58) du second bras (56) du levier (52) repose contre ladite surface d'appui (59) solidaire du moyeu (3), et le doigt de butée (55) du levier (52) est dirigée vers l'organe d'appui supérieur correspondant (60), de façon à limiter les débattements vers le haut de la pale correspondante, par la venue dudit organe d'appui (60) contre ledit doigt de butée (55), et tel que, lorsque la vitesse de rotation du rotor est supérieure au seuil donné, la force centrifuge appliquée à la masselotte (57) fait pivoter le levier (52) à l'encontre du ressort de rappel et dans un sens tel que le doigt de butée (55) est écarté de l'organe d'appui supérieur correspondant (60), de façon à ne pas s'opposer aux débattements vers le haut de la pale correspondante, caractérisé en ce que l'axe de pivot (53) est sensiblement perpendiculaire au plan radial passant par l'axe (A) du rotor et l'axe longitudinal de la pale correspondante, et le levier (52) est monté entre ses extrémités sur le pivot (53) de sorte que son doigt de butée (55), en position inférieure par rapport au pivot (53), est pivoté radialement vers l'intérieur à partir de la position d'arrêt, lorsque la masselotte (57) et le second bras (56), en position supérieure par rapport au pivot (53), sont pivotés radialement vers l'extérieur par la force centrifuge.

12. Dispositif selon la revendication 11, caractérisé en ce que le levier (52) est sensiblement droit et sensiblement vertical en position d'arrêt, et la partie d'appui du second bras (56) est un bec (58) en saillie sensiblement radiale vers l'intérieur, et qui s'arc-boute contre ladite surface d'appui solidaire du moyeu (3) et délimitée par un épaulement (59) en saillie sensiblement radiale vers l'extérieur sur le moyeu (3).

13. Dispositif selon la revendication 12, caractérisé en ce que le bec (58) est en saillie sur le second bras (56) du levier (52) entre le pivot (53) et la masselotte (57) à l'extrémité libre du second bras.

14. Dispositif selon l'une des revendications 11 à 13, caractérisé en ce que la surface d'appui (59) solidaire du moyeu (3) et une chape (54) dans laquelle ledit pivot (53) est monté en rotation, sont présentées par un organe (11) de fixation sur le moyeu (3) desdits moyens (7) de retenue et d'articulation de la pale correspondante.

15. Dispositif selon l'une des revendications 11 à 14, caractérisé en ce que ledit organe d'appui supérieur (60) est monté sur une pièce fourchue (13) de liaison de la pale correspondante au moyeu (3).

16. Tête de rotor, pour rotor principal de giravion, du type comprenant un ensemble mât-moyeu (1) présentant au moins une partie tubulaire en communication avec l'extérieur dudit ensemble (1) par des ouvertures (6) en nombre égal à celui des pales du rotor, ménagées dans ledit ensemble (1) et régulièrement réparties en direction circonférentielle sur ce dernier, autour de l'axe de rotation (A) du rotor, en-dessous de moyens (7) de retenue et d'articulation sur le moyeu (3) de pièces (13) de liaison des pales au moyeu (3), ainsi qu'un dispositif de butées de battement à butées basses comportant une butée centrale réciproque (32) montée radialement coulissante sur un support (38) fixé coaxialement dans ladite partie tubulaire de l'ensemble mât-moyeu (1), et, pour chaque pale, un patin d'appui inférieur (47) fixé sur ladite pièce de liaison (13) correspondante, de façon à limiter les débattements de la pale vers le bas par coopération avec la butée centrale réciproque (32), caractérisée en ce que ledit dispositif de butées de battement est un dispositif selon l'une des revendications 1 à 15 précédentes, dont chacune des branches (33) de la butée centrale réciproque (32) est engagée dans l'une desdites ouvertures (6) de l'ensemble mât-moyeu (1), de sorte que son extrémité radiale externe soit en regard d'un patin d'appui inférieur correspondant (47) à l'extérieur dudit ensemble mât-moyeu (1).

17. Tête de rotor selon la revendication 16, dans laquelle l'ensemble mât-moyeu (1) est un mât-moyeu tubulaire intégré auquel chaque pale est reliée par une pièce de liaison fourchue (13) à deux branches d'attache (13a, 13b) dont au moins la branche inférieure (13b) traverse une ouverture (6) ménagée dans le mât-moyeu tubulaire intégré (1) pour être fixée, à l'intérieur de ce dernier et par son extrémité radiale interne, auxdits moyens de retenue et d'articulation (7) de ladite pièce fourchue (13), caractérisée en ce que, pour chaque pale, le patin d'appui inférieur (47) correspondant est fixé en saillie sous la pièce fourchue correspondante (13), dont la branche d'attache inférieure (13b) traverse la même ouverture (6) du mât-moyeu (1) que celle dans laquelle est engagée la branche (33) de la butée centrale réciproque (32) qui coopère avec le patin d'appui inférieur correspondant (47).

18. Tête de rotor selon l'une des revendications 16 et 17, dans laquelle lesdits moyens de retenue et d'articulation (7) de chaque pièce de liaison (13) sur le moyeu (3) comprennent une armature (9) maintenue sur une partie (4) du moyeu (3) par une ferrure (11) de fixation, retenue contre la périphérie de ladite partie (4) du moyeu, et dans laquelle le dispositif de butées de battement est un dispositif comprenant des butées hautes, selon l'une des revendications 12 à 15, caractérisée en ce que, pour chaque pièce de liaison (13), ladite ferrure de fixation (11) supporte, en saillie et sensiblement radialement vers l'extérieur, d'une part, une chape (54) dans laquelle est monté en rotation le pivot (53) du levier (52) de la butée supérieure escamotable correspondante, et, d'autre part, un épaulement (59) contre lequel prend appui le bec (58) dudit levier (52) en position d'arrêt.

19. Tête de rotor selon la revendication 18, dans laquelle la pièce de liaison (13) de chaque pale au moyeu (3) est un manchon, dont la partie radiale interne est conformée en chape à deux branches (13a, 13b) d'attache sur une autre armature (10) desdits moyens (7) de retenue et d'articulation sur le moyeu (3), en position radiale interne par rapport à l'armature (9) maintenue sur le moyeu (3) par ladite ferrure (11), caractérisée en ce que l'organe d'appui supérieur correspondant (60) et coopérant avec le doigt de butées (55) du levier pivotant correspondant (52) pour limiter les débattements de la pale correspondante vers le haut est au moins une portion de surface tronconique ménagée à l'intérieur dudit manchon (13) et/ou entre les deux branches d'attache (13a, 13b) de la chape radiale interne de ce dernier, qui entoure le levier pivotant (52).

20. Tête de rotor selon l'une des revendications 16 à 19, caractérisée en ce que le support coaxial (38) de la butée centrale réciproque (32) est fixé à l'intérieur de l'ensemble mât-moyeu (1) par des moyens (16) fixant simultanément sur ce dernier une attache (17) sur laquelle est articulé un compas tournant (18) d'entraînement en rotation du plateau tournant (20) d'un dispositif de commande de pas à plateaux cycliques (19), monté autour de l'ensemble mât-moyeu (1).

**Claims**

1. A flapping restrainer device for the blades of a rotorcraft main rotor, of the type comprising a hub mast assembly (1) exhibiting at least one tubular part below means (7) for the retention and articulation of the blades on the hub (3), said device comprising lower flapping restrainers comprising at least one rigid component for the reciprocal support of the blades (34) which is mounted within the hub mast (1) to slide radially on a support (38) fixed coaxially in said tubular part of the hub mast assembly (1) and, for each blade, a lower supporting runner (47), which is integral, in terms of movement, with the blade root, in such a manner as to limit the displacements of the blade in a downward direction by cooperation with the component for the reciprocal support of the blades (34), characterized in that the component for the reciprocal support of the blades (34) is a plate (32) integral with branches (33), the number of which is equal to that of the blades, and which are regularly distributed in a circumferential direction about the plate (32), each extending towards the exterior along a general direction which is substantially radial in relation to the plate (32), and each being engaged into an opening (6) formed in the hub mast assembly (1), and each lower supporting runner (47) is essentially external to the hub mast assembly (1), and is restrained against the external radial end of a corresponding branch (33) to limit the downward flappings of the corresponding blade.

2. The device as claimed in claim 1, characterized in that each branch (33) exhibits a shape which is substantially rectangular in plan and a substantially constant thickness.

3. The device as claimed in any one of claims 1 and 2, characterized in that the reciprocal support plate (32) and the branches (33) are constructed in the form of a star exhibiting a circular central recess (35).

4. The device as claimed in claim 3, characterized in that the star-shaped plate (32) is a plate made of laminated composite materials comprising a stack of layers or plies of fabrics or laps of synthetic or inorganic fibers having a high mechanical strength and agglomerated by a polymerized synthetic resin.

5. The device as claimed in any one of claims 1 to 4, characterized in that the external radial end of each branch (33) is equipped with a contact shoe (36) projecting through the corresponding opening (6) outwardly of the hub mast assembly (1).

6. The device as claimed in claim 5, wherein each contact shoe (36) is a metallic shoe removably mounted (37) on the corresponding branch (33).

7. The device as claimed in any one of claims 3 to 6, characterized in that the star-shaped plate (32) slides radially by its lower face on a lower support plate (39) and is suspended by its upper face from an upper support component (42) by means of at least one resilient restoring component (44), said lower plate (39) and said upper support component (42) being fixed radially in the hub mast assembly (1).

8. The device as claimed in claim 7, characterized in that the resilient component (44) is a coaxial crown or a set of studs which are distributed coaxially in the circumferiential direction, and made of a resiliently deformable material, such as an elastomer.

9. The device as claimed in any one of claims 7 and 8, characterized in that the lower support plate (39) and the upper support component (42) form part of a guide (38) defining a seating of revolution about the axis (A) of the hub mast assembly (1).

10. The device as claimed in any one of claims 1 to 9, characterized in that each lower supporting runner (47) is made integral with the corresponding blade root or with the component (13) for connecting the corresponding blade root to the hub (3) by a rigid connecting piece (49) which is directly fixed (50, 51) below said blade root or said connecting component (13).

11. The flapping restrainer device as claimed in any one of claims 1 to 10, of the type further comprising upper restrainers comprising, for each blade of the rotor, an upper supporting component (60), integral, in terms of movement, with the root of the corresponding blade, and an independent upper stop which is automatically retractable by the centrifugal force, and comprising a lever (52) mounted to oscillate on a pivot (53) integral with the hub (3), and a first arm (55) of which is conformed as a stop finger, while a second arm (56), on the one hand, carries a governor weight (57) and, on the other hand, exhibits a supporting part (58) intended to come against a supporting surface (59) integral with the hub (3), as well as a restoring spring, urging the lever (52) in such a manner as to restore it or to maintain it, when the speed of rotation of the rotor is below a given threshold, in a stationary position, in which said supporting part (58) of the second arm (56) of the lever (52) rests against said supporting surface (59) integral with the hub (3), and the stop finger (55) of the lever (52) is directed towards the corresponding upper supporting component (60), in such a manner as to limit the upward displacements of the corresponding blade, by the coming of said supporting component (60) against said stop finger (55), and such that, when the speed of rotation of the rotor exceeds the given threshold, the centrifugal force applied to the governor weight (57) causes pivoting of the lever (52) against the restoring spring and in a direction such that the stop finger (55) is separated from the corresponding upper supporting component (60) in such a manner as not to oppose the upward displacements of the corresponding blade, characterized in that the axis of pivot (53) is substantially perpendicular to the radial plane passing through the axis (A) of the rotor and the longitudinal axis of the corresponding blade, and the lever (52) is mounted between its ends on the pivot (53) in such a manner that its stop finger (55), in the lower position in relation to the pivot (53), is pivoted radially towards the interior from the stationary position, when the governor weight (57) and the second arm (56), in the upper position in relation to the pivot (53) are pivoted radially towards the exterior by the centrifugal force.

12. The device as claimed in claim 11, characterized in that the lever (52) is substantially straight and substantially vertical in the stationary position, and the supporting part of the second arm (56) is a nose (58) projecting substantially radially towards the interior, and which is buttressed against said supporting surface integral with the hub (3) and delimited by a shoulder (59) projecting substantially radially towards the exterior on the hub (3).

13. The device as claimed in claim 12, characterized in that the nose (58) projects on the second arm (56) of the lever (52) between the pivot (53) and the governor weight (57) at the free end of the second arm.

14. The device as claimed in any one of claims 11 to 13, characterized in that the supporting surface (59) integral with the hub (3) and a cap (54) in which said pivot (53) is rotatably mounted are exhibited by a component (11) for the fixing on the hub (3) of said means (7) for the retention and articulation of the corresponding blade.

15. The device as claimed in any one of claims 11 to 14, characterized in that said upper support component (60) is mounted on a forked piece (13) for connecting the corresponding blade to the hub (3).

16. A rotor head, for a rotorcraft main rotor, of the type comprising a hub mast assembly (1) exhibiting at least one tubular part in communication with the exterior of said assembly (1) by openings (6), the number of which is equal to that of the blades of the rotor and which are formed in said assembly (1) and regularly distributed in the circumferential direction on the latter, about the axis of rotation (A) of the rotor, below means (7) for the retention and articulation on the hub (3) of pieces (13) for connecting the blades to the hub (3), as well as a flapping restrainer device incorporating lower restrainers comprising a reciprocal central restrainer (32) mounted to slide radially on a support (38) fixed coaxially in said tubular part of the hub mast assembly (1) and, for each blade, a lower supporting runner (47) fixed on said corresponding connecting piece (13), in such a manner as to limit the displacements of the blade in a downward direction by cooperation with the reciprocal central restrainer (32), characterized in that said flapping restrainer device is a device as claimed in any one of the preceding claims 1 to 15, of which each one of the branches (33) of the reciprocal central restrainer (32) is engaged into one of said openings (6) of the hub mast assembly (1), in such a manner that its external radial end is opposite a corresponding lower supporting runner (47) outside said hub mast assembly (1).

17. The rotor head as claimed in claim 16, in which the hub mast assembly (1) is an integrated tubular hub mast to which each blade is connected by a forked connecting piece (13) having two attachment branches (13a, 13b), of which at least the lower branch (13b) traverses an opening (6) formed in the integrated tubular hub mast (1) in order to be fixed, within the latter and by its internal radial end, to said means for the retention and articulation (7) of said forked piece (13), characterized in that, for each blade, the corresponding lower supporting runner (47) is fixed so as to project below the corresponding forked piece (13), the lower attachment branch (13b) of which traverses the same opening (6) of the hub mast (1) as that in which there is engaged the branch (33) of the reciprocal central restrainer (32) which cooperates with the corresponding lower supporting runner (47).

18. The rotor head as claimed in any one of claims 16 and 17, in which said means (7) for the retention and articulation of each connecting piece (13) on the hub (3) comprise am armature (9) maintained on a part (4) of the hub (3) by a fixing ferrule (11) which is retained against the periphery of said part (4) of the hub, and in which the flapping device is a device comprising upper restrainers, as claimed in any one of claims 12 to 15, characterized in that, for each connecting piece (13) said fixing ferrule (11) supports, projecting and substantially radially towards the exterior, on the one hand, a cap (54) in which there is rotatably mounted the pivot (53) of the lever (52) of the corresponding retractable upper stop and, on the other hand, a shoulder (59) against which the nose (58) of said lever (52) is supported in the stationary position.

19. The rotor head as claimed in claim 18, in which the piece (13) for connecting each blade to the hub (3) is a sleeve, the internal radial part of which is conformed as a cap having two branches (13a, 13b) for the attachment on another armature (10) of said means (7) for the retention and articulation on the hub (3), in an internal radial position in relation to the armature (9) maintained on the hub (3) by said ferrule (11), characterized in that the corresponding upper supporting component (60) cooperating with the stop finger (55) of the corresponding pivoting lever (52) in order to limit the displacements of the corresponding blade in an upward direction is at least one frustoconical portion formed within said sleeve (13) and/or between the two attachment branches (13a, 13b) of the internal radial cap of the sleeve, which surrounds the pivoting lever (52).

20. The rotor head as claimed in any one of claims 16 to 19, characterized in that the coaxial support (38) of the reciprocal central restrainer (32) is fixed within the hub mast assembly (1) by means (16) simultaneously fixing on the latter a fastener (17) on which there is articulated a rotating compass (18) for driving in rotation the rotating plate (20) of a cyclic pitch control device (19), which is mounted about the hub mast assembly (1).

**Patentansprüche**

1. Schlagbewegungs-Begrenzereinrichtung für die Blätter eines Drehflügelflugzeugs-Hauptrotors einer Bauart, die eine Nabenmasteinheit (1) mit wenigstens einem röhrenförmigen Teil unterhalb von Mitteln (7) zum Halten und Schwenken der Blätter an der Nabe (3) umfaßt, wobei die Einrichtung versehen ist mit unteren Schlagbegrenzern, die wenigstens ein starres Blatt-Widerlagerelement (34) aufweisen, das im Innern des Nabenmastes (1) angebracht ist und auf einer im röhrenförmigen Teil der Nabenmasteinheit (1) koaxial befestigten Halterung (38) radial verschiebbar ist, und, für jedes Blatt, mit einer unteren Abstützkufe (47), die mit der Basis des Blattes bewegungsfest verbunden ist, derart, daß die nach unten gerichteten Ausschläge des Blattes durch das Zusammenwirken mit dem Blatt-Widerlagerelement (34) begrenzt werden, dadurch gekennzeichnet, daß das Blatt-Widerlagerelement (34) eine Scheibe (32) ist, die einteilig mit Schenkeln (33) ausgebildet sind, deren Anzahl gleich derjenigen der Blätter ist und die in Umfangsrichtung um die Scheibe (32) gleichmäßig verteilt sind und sich jeweils in einer im allgemeinen im wesentlichen radialen Richtung in bezug auf die Platte (32) nach außen erstrecken und jeweils in einer in der Nabenmasteinheit (1) ausgesparten Öffnung (6) in Eingriff sind, jede untere Abstützkufe (47) im wesentlichen außerhalb des Nabenmastes (1) angeordnet ist und gegen das in radialer Richtung äußere Ende eines entsprechenden Schenkels (33) anschlägt, um die nach unten gerichteten Schlagbewegungen des entsprechenden Blattes zu begrenzen.

2. Einrichtung gemäß Anspruch 1, dadurch gekennzeichnet, daß jeder Schenkel (33) eine im wesentlichen rechtwinklige ebene Form mit einer im wesentlichen konstanten Dicke besitzt.

3. Einrichtung gemäß einem der Ansprüche 1 und 2, dadurch gekennzeichnet, daß die Widerlagerscheibe (32) und die Schenkel (33) sternförmig beschaffen sind und eine mittige, kreisförmige Aussparung (35) aufweisen.

4. Einrichtung gemäß Anspruch 3, dadurch gekennzeichnet, daß die sternförmige Platte (32) eine Scheibe aus in Schichten angeordneten Verbundwerkstoffen ist, die einen Stapel von Gewebeschichten oder -einlagen oder Kunstfaser- oder Mineralfaservliesen, die einen erhöhten mechanischen Widerstand besitzen und mittels eines polymerisierten Kunstharzes gebunden sind, umfassen.

5. Einrichtung gemäß einem der Ansprüche 1 bis 4, dadurch gekennzeichnet, daß das radial äußere Ende eines jeden Schenkels (33) mit einem Kontaktschuh (36) ausgerüstet ist, der durch die entsprechende Öffnung (6) nach außen aus der Nabenmasteinheit (1) hervorsteht.

6. Einrichtung gemäß Anspruch 5, dadurch gekennzeichnet, daß jeder Kontaktschuh (36) ein Metallschuh ist, der am entsprechenden Schenkel (33) ablösbar (37) angebracht ist.

7. Einrichtung gemäß einem der Ansprüche 3 bis 6, dadurch gekennzeichnet, daß die sternförmige Scheibe (32) mit ihrer Unterseite auf einer unteren Halteplatte (39) radial gleitet und mit ihrer Oberseite über wenigstens ein dazwischen eingesetztes elastisches Rückstellelement (44) an einem oberen Halteelement (42) aufgehängt ist, wobei die untere Platte (39) und das obere Halteelement (42) in der Nabenmasteinheit in radialer Richtung befestigt sind.

8. Einrichtung gemäß Anspruch 7, dadurch gekennzeichnet, daß das elastische Mittel (44) durch einen koaxialen Kranz oder eine Gesamtheit von in Umfangsrichtung koaxial verteilten Klötzen gegeben ist und aus einem elastisch verformbaren Material wie etwa einem Elastomer hergestellt ist.

9. Einrichtung gemäß einem der Ansprüche 7 und 8, dadurch gekennzeichnet, daß die untere Halteplatte (39) und das obere Halteelement (42) einer Führung (38) zugehören, die einen Aufnahmesitz für die Drehung um die Achse (A) der Nabenmasteinheit (1) definieren.

10. Einrichtung gemäß einem der Ansprüche 1 bis 9, dadurch gekennzeichnet, daß jede untere Abstützkufe (47) mit der entsprechenden Blattbasis oder mit dem Verbindungselement (13) der entsprechenden Blattbasis an der Nabe (3) über ein unter der Blattbasis oder dem Verbindungselement (13) direkt befestigtes (50,51) starres Verbindungsteil (49) verbunden ist.

11. Schlagbewegungs-Begrenzereinrichtung gemäß einem der Ansprüche 1 bis 10, von einer Bauart, die außerdem obere Begrenzer umfaßt, die, für jedes Rotorblatt, versehen sind mit einem oberen Abstützelement (60), das mit der entsprechenden Blattbasis bewegungsfest verbunden ist, und einem unabhängigen oberen Begrenzer, der durch die Zentrifugalkraft automatisch ausklappbar ist und einen Hebel (52) umfaßt, der an einem mit der Nabe (3) verbundenen Drehzapfen (53) hin und her schwenkbar angebracht ist, wobei ein erster Arm (55) des Hebels (52) einen Anschlagzapfen bildet, während ein zweiter Arm (56) desselben einerseits ein Fliehgewicht (57) trägt und andererseits ein Abstützteil (58) aufweist, das dazu vorgesehen ist, mit einer einteilig mit der Nabe (3) ausgebildeten Abstützfläche (59) in Eingriff zu gelangen, wobei jeder obere Begrenzer eine Rückstellfeder umfaßt, die den Hebel (52) derart belastet, daß dieser dann, wenn die Drehgeschwindigkeit der Rotors unterhalb eines gegebenen Schwellenwertes liegt, in eine Ruheposition zurückgestellt oder in dieser gehalten wird, in welcher der Abstützteil (58) des zweiten Arms (56) des Hebels (52) auf der einteilig mit der Nabe (3) ausgebildeten Abstützfläche (59) aufruht und der Anschlagzapfen (55)-des Hebels (52) zum entsprechenden oberen Abstützelement (60) gerichtet ist, um die nach oben gerichteten Ausschläge des entsprechenden Blattes durch die Berührung des Abstützelementes (60) mit dem Anschlagzapfen (55) zu begrenzen, und derart, daß dann, wenn die Drehgeschwindigkeit des Rotors oberhalb des gegebenen Schwellenwertes liegt, die auf das Fliehgewicht (57) wirkende Zentrifugalkraft den Hebel (52) entgegen der Rückstellfeder und in einem Sinn, in dem der Anschlagzapfen (55) vom entsprechenden oberen Abstützelement (60) entfernt wird, schwenkt, derart, daß er den nach oben gerichteten Ausschlägen des entsprechenden Blattes nicht entgegenwirkt, dadurch gekennzeichnet, daß die Schwenkachse (53) zu der durch die Mittelachse (A) des Rotors und die Längsachse des entsprechenden Blattes verlaufenden Ebene im wesentlichen senkrecht ist, und der Hebel (52) zwischen seinen Enden am Drehzapfen (53) so angebracht ist, daß sein Anschlagzapfen (55) in der bezüglich des Drehzapfens (53) unteren Position aus der Ruheposition radial nach innen geschwenkt wird, wenn das Fliehgewicht (57) und der zweite Arm (56) in der bezüglich des Drehzapfens (53) oberen Positionen durch die Zentrifugalkraft in radialer Richtung nach außen geschwenkt werden.

12. Einrichtung gemäß Anspruch 11, dadurch gekennzeichnet, daß der Hebel (52) im wesentlichen geradlinig und in der Ruheposition im wesentlichen vertikal orientiert ist und der Abstützteil des zweiten Arms (56) eine im wesentlichen radial nach innen vorspringende Nase (58) ist, die gegen die einteilig mit der Nabe (3) ausgebildete und durch eine von der Nabe (3) im wesentlichen radial nach außen vorspringende Schulter (59) begrenzte Abstützfläche gespreizt wird.

13. Einrichtung gemäß Anspruch 12, dadurch gekennzeichnet, daß die Nase (58) am zweiten Arm (56) des Hebels (52) zwischen dem Drehzapfen (53) und dem am freien Ende des zweiten Arms befindlichen Fliehgewicht (57) vorspringt.

14. Einrichtung gemäß einem der Ansprüche 11 bis 13, dadurch gekennzeichnet, daß die einteilig mit der Nabe (3) ausgebildete Abstützfläche (59) und ein Bügel (54), in dem der Drehzapfen (53) drehbar angebracht ist, durch ein Element (11) für die Befestigung der Mittel (7) zum Halten und Schwenken des entsprechenden Blattes an der Nabe (3) gebildet werden.

15. Einrichtung gemäß einem der Ansprüche 11 bis 14, dadurch gekennzeichnet, daß das obere Abstützelement (60) an einem Gabelteil (13) für die Verbindung des entsprechenden Blattes an der Nabe (3) angebracht ist.

16. Rotorkopf für einen Drehflügelflugzeug-Hauptrotor von einer Bauart, der eine Nabenmasteinheit (1) umfaßt, die versehen ist mit wenigstens einem röhrenförmigen Teil, der mit dem Äußeren der Einheit (1) über Öffnungen (6) in Verbindung steht, deren Anzahl gleich derjenigen der Rotorblätter ist und die in der Einheit (1) ausgespart und in Umfangsrichtung der letzteren um die Drehachse (A) des Rotors unterhalb von Mitteln (7) zum Halten und Schwenken von der Verbindung der Blätter mit der Nabe (3) dienenden Teilen (13) an der Nabe (3) regelmäßig verteilt sind, sowie mit einer Schlagbewegungs- Begrenzereinrichtung mit unteren Begrenzern, die ein mittiges Widerlager (32), das an einer im röhrenförmigen Teil der Nabenmasteinheit (1) koaxial befestigten Halterung (38) radial verschiebbar angebracht ist, und, für jedes Blatt, eine untere Abstützkufe (47), die am entsprechenden Verbindungsteil (13) befestigt ist, aufweist, derart, daß die nach unten gerichteten Ausschläge des Blattes durch das Zusammenwirken mit dem mittigen Widerlager (32) begrenzt werden, dadurch gekennzeichnet, daß die Schlagbewegungs-Begrenzereinrichtung eine Einrichtung gemäß einem der vorangehenden Ansprüche 1 bis 15 ist, von der jeder Schenkel (33) des mittigen Widerlagers (32) in einer der Öffnungen (6) der Nabenmasteinheit (1) in Eingriff ist, derart, daß sich sein radial äußeres Ende gegenüber einer entsprechenden unteren Abstützkufe (47) außerhalb der Nabenmasteinheit (1) befindet.

17. Rotorkopf gemäß Anspruch 16, in dem die Nabenmasteinheit (1) ein einteiliger röhrenförmiger Nabenmast ist, an dem jedes Blatt mittels eines gabelförmigen Verbindungsteils (13) mit zwei Befestigungsschenkeln (13a, 13b) verbunden ist, von denen wenigstens der untere Schenkel (13b) die im einteiligen röhrenförmigen Nabenmast (1) ausgesparte Öffnung (6) durchsetzt, um im Inneren des letzteren mittels seines radial inneren Endes an den Mitteln (7) zum Halten und Schwenken des gabelförmigen Teils (13) befestigt zu werden, dadurch gekennzeichnet, daß für jedes Blatt die entsprechende untere Abstützkufe (47) am entsprechenden gabelförmigen Teil (13) vorspringend befestigt ist, wobei dessen unterer Befestigungsschenkel (13b) dieselbe Öffnung (6) des Nabenmastes (1) durchsetzt, in die der Schenkel (33) des mittigen Widerlagers (32), der mit der entsprechenden unteren Abstützkufe (47) zusammenwirkt, eingreift.

18. Rotorkopf gemäß einem der Ansprüche 16 und 17, in dem die Mittel (7) zum Halten und Schwenken eines jeden Verbindungsteils (13) mit der Nabe (3) eine Bewehrung (9) aufweisen, die mittels eines Befestigungsbeschlages (11) an einem Teil (4) der Nabe (3) gehalten wird und gegen die Umfangsfläche des Teils (4) der Nabe gehalten wird, und in dem die Schlagbewegungs-Begrenzereinrichtung eine Einrichtung mit oberen Begrenzern gemäß einem der Ansprüche 12 bis 15 ist, dadurch gekennzeichnet, daß für jedes Verbindungsteil (13) der Befestigungsbeschlag (11) im wesentlichen radial nach außen vorspringend einerseits einen Bügel (54), in dem der Drehzapfen (53) des Hebels (52) des entsprechenden ausklappbaren oberen Begrenzers drehbar angebracht ist, und andererseits eine Schulter (59), gegen die sich in der Ruheposition die Nase (58) des Hebels (52) abstützt, trägt.

19. Rotorkopf gemäß Anspruch 18, in dem das Teil (13) für die Verbindung eines jeden Blattes an der Nabe (3) eine Hülse ist, deren radial innerer Teil als Bügel ausgebildet ist, der zwei Schenkel (13a, 13b) aufweist, die der Befestigung der Mittel (7) zum Halten und Schwenken an der Nabe (3) an einer weiteren Bewehrung (10) dienen, wobei sich diese Bewehrung (10) in bezug auf die mittels des Beschlages (11) an der Nabe (3) gehaltene Bewehrung (9) in einer radial inneren Position befindet, dadurch gekennzeichnet, daß das entsprechende obere Abstützelement (60), das mit dem Anschlagzapfen (55) des entsprechenden schwenkbaren Hebels (52) zusammenwirkt, um die nach oben gerichteten Ausschläge des entsprechenden Blattes zu begrenzen, wenigstens ein Abschnitt einer kegelstumpfförmigen Oberfläche ist, die im Inneren der Hülse (13) und/oder zwischen den zwei Befestigungsschenkeln (13a, 13b) des radial inneren Bügels der Hülse (13), die den schwenkbaren Hebel (52) umgibt, angeordnet ist.

20. Rotorkopf gemäß einem der Ansprüche 16 bis 19, dadurch gekennzeichnet, daß die koaxiale Halterung (38) des mittigen Widerlagers (32) im Inneren der Nabenmasteinheit (1) durch Mittel (16) befestigt ist, die gleichzeitig an dieser letzteren eine Halterung (17) befestigen, an der ein drehbarer Zirkel (18) angelenkt ist, der dem Antrieb in Drehrichtung der drehbaren Scheibe (20) einer schrittsteuerungseinrichtung mit zyklischen Platten (19), die um die Nabenmasteinheit (1) angebracht ist, dient.

FIG. 1

EP 0 360 688 B1

FIG. 2